(19) **Europäisches Patentamt / European Patent Office / Office européen des brevets**

(11) **EP 4 284 077 A1**

(12) ## EUROPEAN PATENT APPLICATION
published in accordance with Art. 153(4) EPC

(43) Date of publication:
**29.11.2023  Bulletin 2023/48**

(21) Application number: **22753013.6**

(22) Date of filing: **10.02.2022**

(51) International Patent Classification (IPC):
*H04W 52/14* (2009.01)     *H04W 52/54* (2009.01)
*H04W 52/36* (2009.01)     *H04W 52/24* (2009.01)
*H04W 8/24* (2009.01)

(52) Cooperative Patent Classification (CPC):
**H04W 8/24; H04W 52/14; H04W 52/24;**
**H04W 52/36; H04W 52/54**

(86) International application number:
**PCT/KR2022/002059**

(87) International publication number:
**WO 2022/173253 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.02.2021  KR 20210019512**

(71) Applicant: **Samsung Electronics Co., Ltd.
Suwon-si, Gyeonggi-do 16677 (KR)**

(72) Inventor: **KIM, Namhoon
Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54)  **DEVICE AND METHOD FOR UPLINK POWER CONTROL IN WIRELESS COMMUNICATION SYSTEM**

(57)    The disclosure relates to a 5th Generation (5G) or pre-5G communication system for supporting a higher data transmission rate than a 4th Generation (4G) communication system such as Long Term Evolution (LTE). According to various embodiments of the disclosure, a method of operating a User Equipment (UE) in a wireless communication system may include receiving, from a base station, downlink control information including a Transmit Power Control (TPC) command, if the UE is related to an unrestricted TPC configuration, the UE reaches maximum transmit power, and a power control value depending on the TPC command is a positive value, determining uplink transmit power, based on the power control value, and transmitting an uplink signal, based on the determined uplink transmit power.

FIG.1

**Description**

[Technical Field]

The disclosure relates, in general, to a wireless communication system, and, in particular, to an apparatus and method for uplink power control in a wireless communication system.

[Background Art]

To meet a demand on wireless data traffic which has been in an increasing trend after a 4th generation (4G) communication system was commercialized, there is an ongoing effort to develop an improved 5th generation (5G) communication system or a pre-5G communication system. For this reason, the 5G communication system or the pre-5G communication system is called a beyond 4G network communication system or a post long term evolution (LTE) system.

To achieve a high data transfer rate, the 5G communication system is considered to be implemented in a millimeter wave (mmWave) band (e.g., such as a 60 gigahertz (GHz) band). To reduce a propagation path loss at the mmWave band and to increase a propagation delivery distance, beamforming, massive multiple input multiple output (MIMO), full dimensional MIMO (FD-MIMO), array antenna, analog beam-forming, and large scale antenna techniques are under discussion in the 5G communication system.

In addition, to improve a network of a system, techniques, such as an evolved small cell, an advanced small cell, a cloud radio access network (RAN), an ultra-dense network, device to device (D2D) communication, a wireless backhaul, a moving network, cooperative communication, coordinated multi-Points (CoMP), and reception interference cancellation, or the like are being developed in the 5G communication system.

In addition thereto, hybrid frequency shift keying (FSK) and quadrature amplitude modulation (QAM) (FQAM) and sliding window superposition coding (SWSC) as an advanced coding modulation (ACM) technique and filter bank multi carrier (FBMC), non orthogonal multiple access (NOMA), and sparse code multiple access (SCMA), or the like as an advanced access technology are being developed in the 5G system.

In a wireless communication system, a terminal may transmit an uplink signal to a base station. The base station may control power of the uplink signal of the terminal. Since the power of the uplink signal is related to resource allocation, a more efficient power control method is required.

[DISCLOSURE OF INVENTION]

[Technical Problem]

Based on the aforementioned discussion, the disclosure provides an apparatus and method for uplink power control in a wireless communication system.

In addition, the disclosure provides an apparatus and method for efficiently operating a transmit power control command in a wireless communication system.

In addition, the disclosure provides an apparatus and method for a Power Headroom Report (PHR) indicating more accurate surplus power in a wireless communication system.

[Solution to Problem]

According to various embodiments of the disclosure, a method of operating a user equipment (UE) in a wireless communication system may include receiving, from a base station, downlink control information including a transmit power control (TPC) command, if the UE is related to an unrestricted TPC configuration, the UE reaches maximum transmit power, and a power control value depending on the TPC command is a positive value, determining uplink transmit power, based on the power control value, and transmitting an uplink signal, based on the determined uplink transmit power.

According to various embodiments of the disclosure, a method of operating a UE in a wireless communication system may include determining a value of a power headroom of a serving cell, and transmitting, to a base station, a power headroom report (PHR) including the value of the power headroom. The PHR may include information indicating a size of the power headroom indicated with 6 bits and information indicating a sign of the power headroom indicated with 1 bit.

According to various embodiments of the disclosure, a method of operating a base station in a wireless communication system may include transmitting, to a LTE, downlink control information including a TPC command, and receiving, from the UE, an uplink signal. Uplink transmit power of the uplink signal may be determined based on the power control value, if the UE is related to an unrestricted TPC configuration, the UE reaches maximum transmit power, and a power control value depending on the TPC command is a positive value; and may be determined, by the base station, without having to use the power control value, if the UE is not related to the unrestricted TPC configuration, the UE reaches the maximum transmit power, and the power control value depending on the TPC command is a positive value.

According to various embodiments of the disclosure, a method of operating a base station in a wireless communication system may include receiving, from a LTE, a power headroom report (PHR) including a value of a power headroom of a serving cell. The PHR may include information indicating a size of the power headroom indicated with 6 bits and information indicating a sign of the power headroom indicated with 1 bit.

[Advantageous Effects of Invention]

An apparatus and method according to various embodiments of the disclosure provide an apparatus and method for increasing an uplink transfer rate and resource allocation efficiency by performing uplink power calculation using a transmit power control command even in case of reaching maximum power.

In addition, an apparatus and method according to various embodiments of the disclosure allow a base station to more accurately recognize surplus power of a user equipment (UE) by transferring a power headroom report (PHR) of a detailed type.

Advantages acquired in the disclosure are not limited to the aforementioned advantages, and other advantages not mentioned herein may be clearly understood by those skilled in the art to which the disclosure pertains from the following descriptions.

[BRIEF DESCRIPTION OF DRAWINGS]

FIG. 1 illustrates an example of a wireless communication environment according to various embodiments of the disclosure;
FIG. 2 illustrates an example of a radio resource region in a wireless communication system according to various embodiments of the disclosure;
FIG. 3 illustrates an example of a radio protocol structure of a wireless communication system of the disclosure;
FIG. 4A illustrates an example of signaling for uplink transmission depending on a transmit power control command according to embodiments of the disclosure;
FIG. 4B illustrates an example of a Power Spectral Density (PSD) and resource allocation relationship according to embodiments of the disclosure;
FIG. 5 illustrates an example of Power Headroom Report (PHR) transmission according to embodiments of the disclosure;
FIG. 6 illustrates an example of LTE capability information transmission according to embodiments of the disclosure;
FIG. 7 illustrates a structure of a base station in a wireless communication system according to various embodiments of the disclosure; and
FIG. 8 illustrates a structure of a LTE in a wireless communication system according to various embodiments of the disclosure.

[BEST MODE FOR CARRYING OUT THE INVENTION]

Terms used in the disclosure are for the purpose of describing particular embodiments only and are not intended to limit other embodiments. All terms (including technical and scientific terms) used herein have the same meaning as commonly understood by those ordinarily skilled in the art disclosed in the disclosure. It will be further understood that terms, such as those defined in commonly used dictionaries, should be interpreted as having a meaning that is consistent with their meaning in the context of the relevant art, and will not be interpreted in an idealized or overly formal sense unless expressly so defined herein. Optionally, the terms defined in the disclosure should not be interpreted to exclude the embodiments of the disclosure.

A hardware-based approach is described for example in the various embodiments of the disclosure described hereinafter. However, since the various embodiments of the disclosure include a technique in which hardware and software are both used, a software-based approach is not excluded in the embodiments of the disclosure.

Although a term used in the following description in relation to signal processing (e.g., encoding/decoding, channel coding, scrambling, modulation, IFFT/FFI, cyclic prefix (CP) insertion/deletion) is described according to a term defined in the current 3rd generation partnership project (3GPP) LTE or NR standard, other terms having the same technical meaning may also be used. In addition, a term used to refer to parameters used in the following description (e.g., a format name, a parameter name), a term used to refer to a variable (e.g., c, f, i, j, or the like), a term used to refer to a channel (e.g., an uplink control channel), a term used to refer to control information (e.g., medium access control (MAC) control element (CE)), uplink control information (UCI), scheduling request (SR), and hybrid acknowledge repetition reQuest-Acknowledge (HARQ-ACK), a term used to refer to network entities (e.g., a transmission device, a reception device, a transmission end, a reception end, a base station, a terminal, a communication node, a radio node, a radio unit, a network node, a master node (MN), a secondary node (SN), a transmission/reception point (TRP), a digital unit (DU), a radio unit (RU), a massive MIMO unit (MMU), and the like are exemplified for convenience of explanation. Therefore, the disclosure is not limited to terms described below, and thus other terms having the same technical meaning may also be used.

In addition, the disclosure describes various embodiments by using terms used in some communication standards (e.g., long term evolution (LTE), new radio (NR) defined in the 3$^{rd}$ generation partnership project (3GPP)). A 3GPP mobile communication system mentioned in the disclosure may include both a 4G (hereinafter, LTE) and 5G (hereinafter, NR). Various embodiments of the disclosure may be easily modified and applied to not only the 3GPP mobile communication system but also other communication systems.

In addition, although an expression 'greater than' or 'less than' is used in the disclosure to determine whether a specific condition is satisfied (or fulfilled), this is for exemplary purposes only and does not exclude an expression of 'greater than or equal to' or 'less than or equal to'. A condition described as 'greater than or equal to' may be replaced with 'greater than'. A condition described as 'less than or equal to' may be replaced with 'less than'. A condition described as 'greater than or equal to and less than' may be replaced with 'greater than and less than or equal to'.

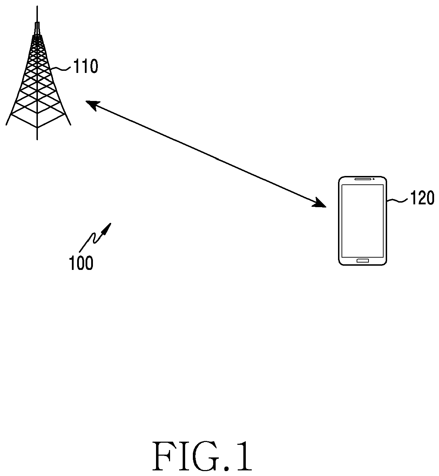

FIG. 1 illustrates an example of a wireless communication environment according to various embodiments of the disclosure. Referring to FIG. 1, a base station 110 and a terminal 120 are exemplified as part of nodes which use a radio channel in a wireless communication system. The terminal 120 may be coupled to a plurality of base stations. Although not shown in FIG. 1, the bae stations may be coupled to the terminal 120 through multiple connectivity (e.g., dual connectivity (DC)).

The base station 110 is a network infrastructure which provides a radio access to the terminal 120. The base station 110 has a coverage defined as a specific geographic region, based on a distance capable of transmitting a signal. The term 'coverage' used hereinafter may refer to a service coverage area in the base station 110. The base station 110 may cover one cell, or may cover multiple cells. Herein, the multiple cells may be divided by a supported frequency and an area of a covered sector.

In addition to the term 'base station', the base station 110 may be referred to as an 'access point (AP)', an 'eNodeB (eNB)', a '5$^{th}$ generation (5G) node', a '5G nodeB (NB)', a 'next generation Node B (gNB)', a 'wireless point', a 'transmission/reception point (TRP)', a distributed unit (DU)', a 'radio unit (RU)', a remote radio head (RRH), or other terms having equivalent technical meanings. According to various embodiments of the disclosure, the base station 110 may be coupled to at least one TRP. The base station 110 may transmit a downlink signal or receive an uplink signal with respect to the terminal 120 through the at least one TRP.

As a device used by a user, the terminal 120 communicates with the base station 110 through the radio channel. Optionally, the terminal 120 may be operated without user involvement. For example, as a device for performing machine type communication (MTC), the terminal 120 may not be carried by the user. In addition to the term 'terminal', the terminal 120 may be referred to as a 'user equipment (UE)', a 'mobile station', a 'subscriber station', a 'customer premises equipment (CPE)', a 'remote terminal', a 'wireless terminal', an 'electronic device', a 'vehicle terminal', a 'user device', or other terms having equivalent technical meanings.

A carrier aggregation (CA) technology is a technology introduced in the 3GPP standard release 10. In the CA technology, the terminal is coupled to a homogenous wireless communication cell group having a common radio resource control entity, and a frequency resource on a component carrier of each cell located in a different frequency band is used for signal transmission/reception to increase frequency use efficiency of the terminal and the base station. A dual connectivity (DC) technology is one type of multiple-connectivity technologies introduced from the 3$^{rd}$ generation partnership project (3GPP) standard release 12. In the DC technology, a terminal is simultaneously coupled to two independent heterogeneous or homogeneous wireless communication cell groups having a separate radio resource control entity, and a frequency resource on a component carrier of a cell in each cell group located in a different frequency band is used for signal transmission/reception to increase frequency use efficiency of the terminal and a base station. The DC consists of a mater cell group in which a control plane is directly coupled to a core network to manage a radio resource control state of the terminal and a secondary cell group associated with the mater cell group.

Due to technical advantages of increasing efficiency in using limited wireless communication resources of the terminal and base station, the DC technology and the CA technology are actively studied in academic terms. More particularly, a 5G mobile communication system uses a non-stand alone type in which an operation is achieved in association with a 4G core network as a basic operation scheme, which is utilized as a core technology in a commercial service supporting the 5G mobile communication system.

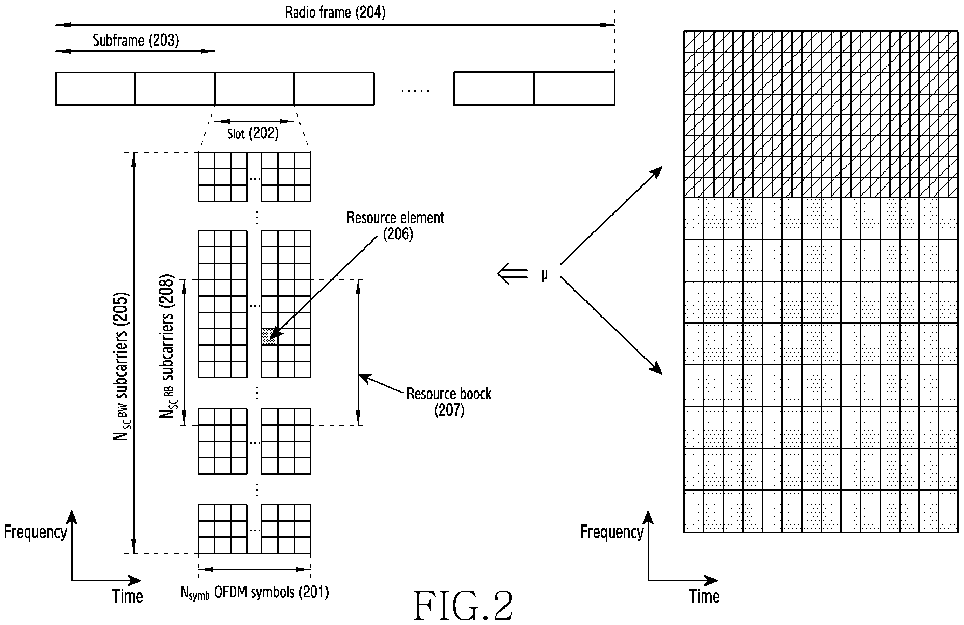

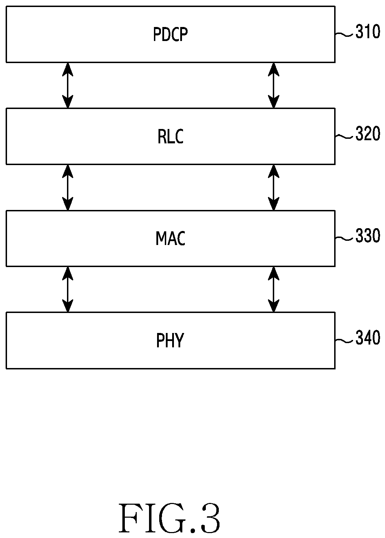

A communication node (e.g., a terminal, a base station, an entity of a core network) according to various embodiment of the disclosure may operate in an NR system. In addition, the communication node (e.g., the terminal, the base station, the entity of the core network) according to various embodiment of the disclosure may operate in an LTE system together. A structure and layer of FIG. 2 and FIG. 3 will be described hereinafter by taking the NR communication system for example, but the description is only for purpose, and it is not construed that other communication systems are excluded.

FIG. 2 illustrates an example of a radio resource region in a wireless communication system according to various embodiments of the disclosure. In various embodiments, the radio resource region may include a structure of a time-frequency domain. According to an embodiment, the wireless communication system may include an NR communication system.

Referring to FIG. 2, in the radio resource region, a horizontal axis represents a time domain, and a vertical axis represents a frequency domain. A length of a radio frame 204 is 10ms. The radio frame 204 may be a time-domain duration consisting of 10 subframes. A length of a subframe 203 is 1ms. A configuration unit in the time domain may be an orthogonal frequency division multiplexing (OFDM) and/or discrete Fourier transform-spread-OFDM (DFT-s-OFDM) symbol, and Nsymb OFDM and/or DFT-s-OFDM symbols 201 may be gathered to constitute one slot 202. In various embodiments, the OFDM symbol may include a symbol for a case of transmitting and receiving a signal by using an OFDM multiplexing scheme, and the DFT-s-OFDM symbol may include a symbol for a case of transmitting and receiving a signal by using a DFT-s-OFDM or single carrier frequency division multiplexing Access (SC-FDMA) multiplexing scheme. A minimum transmission unit in the frequency domain is a subcarrier, and a carrier bandwidth constituting a resource grid may consist of NscBW subcarriers 205 in total. In addition, although an embodiment related to downlink signal transmission and reception is described in the disclosure for convenience of explanation, this is also applicable to an embodiment related to uplink signal transmission and reception.

In some embodiments, the number of the slots 202 constituting one subframe 203 and the length of the slot 202 may vary depending on a subcarrier spacing. The subcarrier spacing may be referred to as a numerology $\mu$. That is, the subcarrier spacing, the number of slots included in the subframe, the length of the slot, and the length of the subframe may be configured variably. For example, when a Subcarrier spacing (SCS) is 15kHz in the NR communication system, one slot 202 may constitute one subframe 203, and each of the slot 202 and the subframe 203 may have a length of 1ms. In addition, for example, when the SCS is 30kHz, two slots may constitute one subframe 203. In this case, the length of the slot is 0.5ms, and the length of the subframe is 1ms.

In some embodiments, the subcarrier spacing, the number of slots included in the subframe, the length of the slot, and the length of the subframe may be applied variably according to a communication system. For example, in case of the LTE system, the subcarrier spacing may be 15kHz, and 2 slots may constitute one subframe. In this case, the length of the slot may be 0.5ms, and the length of the subframe may be 1ms. As another example, in case of the NR system, the subcarrier spacing $\mu$ may be one of 15kHz, 30kHz, 60kHz, 120kHz, and 240kHz, and the number of slots included in one subframe may be 1, 2, 4, 8, and 16 according to the subcarrier spacing $\mu$.

A basic unit of a resource in a time-frequency domain may be a resource element (RE) 206, and the RE 206 may be represented by an OFDM symbol index and a subcarrier index. A resource block (RB) may include a plurality of REs. In the NR system, the RB (or a physical resource block (PRB)) 207 may be defined as NSCRB consecutive subcarriers in the frequency domain. The number of subcarriers may be NSCRB =12. The frequency domain may include Common Resource Blocks (CRBs). The PRB may be defined in a bandwidth part (BWP) on the frequency domain. CRB and PRB numbers may be determined differently depending on a subcarrier spacing. In the LTE system, the RB may be defined as Nsymb consecutive OFDM symbols in the time domain and NSCRB consecutive subcarriers in the frequency domain.

In the NR and/or LTE system, scheduling information on downlink data or uplink data may be transferred from the base station to the LTE through downlink control information (DCI). In various embodiments, the DCI may be defined according to various formats, and each format may indicate whether the DCI includes scheduling information (e.g., a UL grant) for the uplink data, whether the DCI includes scheduling information (e.g., a DL grant) for the downlink data, whether the DCI is a compact DCI of which control information is small in size, whether the DCI is a fall-back DCI, whether spatial multiplexing using multiple antennas is applied, and/or whether the DCI is used for power control. For example, NR DCI format 1_0 or NR DCI format 1_1 may include scheduling for downlink data. In addition, for example, NR DCI format 0_0 or NR DCI format 0_1 may include scheduling for uplink data.

According to embodiments of the disclosure, the DCI format may include a field indicating a transmit power command (TPC) command. This field may indicate an offset value to be applied to a compensation parameter as shown in Table 1 described below. According to an embodiment, in case of the DCI format (e.g., DCI format 0_0, 0_1, 0_2) for uplink resource allocation, the DCI may include a TPC command for a PUSCH. According to an embodiment, in case of the DCI format (e.g., DCI format 1_0, 1_1, 1_2) for uplink resource allocation, the DCI may include a TPC command for a PUCCH. In addition, according to an embodiment, in case of the DCI format (e.g., DCI format 2_2) for uplink transmission control, the DCI may include a TPC command for a PUSCH or PUCCH for a plurality of LTEs. In addition, according to an embodiment, in case of the DCI format (e.g., DCI format 2_3) for an SRS, the DCI may include a TPC command for the SRS.

The DCI may be transmitted on a downlink physical control channel, i.e., a physical downlink control channel (PDCCH) (or control information, hereinafter used interchangeably) or an enhanced PDCCH (EPDCCH) (or enhanced control information, hereinafter used interchangeably) through a channel coding and modulation process. Hereinafter, transmission and reception of the PDCCH or EPDCCH may be understood as DCI transmission and reception on the PDCCH or EPDCCH, and transmission and reception of a physical downlink shared channel (PDSCH) and physical uplink shared channel (PUSCH) may be understood as transmission and reception for downlink data and uplink data respectively in time and frequency resource domains indicated by the DCI.

In the NR and/or LTE system, uplink control information (UCI) may be transmitted from the LTE to the base station. The UCI may be used to transfer at least one of the following pieces of control information.

- scheduling request (SR): It is information used to request for an uplink shared channel (UL-SCH) resource. The SR may be transmitted by using an On-Off Keying (OOK) scheme.
- HARQ-ACK: It is a response to a PDCCH and/or a response to a downlink data packet (e.g., codeword) on a PDSCH. It indicates whether the PDCCH or the PDSCH have been successfully received. For example, HARQ-ACK of 1 bit is transmitted in response to a single downlink codeword, and HARQ-ACK of 2 bits is transmitted in response to a downlink codeword. The HARQ-ACK response includes a positive ACK (simply, ACK), a negative ACK (hereinafter, NACK), discontinuous transmission (DTX) or NACK/DTX. Hereinafter, in the disclosure, HARQ-ACK is used interchangeably with HARQ ACK/NACK and ACK/NACK.
- channel state information (CSI): It is feedback information on a downlink channel. The CSI may include at least one of a Rank Indicator (RI), a precoding matrix indicator (PMI), a channel quality indicator (CQI), a channel state information-reference signal (CSI-RS) resource indicator (CRI), a synchronization signal/physical broadcast channel (SS/PBCH) block resource indicator (SSBRI), a layer indicator (LI), a reference signal received power (RSRP), or a signal-to-noise ratio (SINR).

Uplink control information may be transferred via a physical channel through the channel coding and modulation process. The uplink control information may be transmitted through an uplink control channel, i.e., a PUCCH, or may be piggy-backed and transmitted through a physical uplink shared channel (PUSCH). Hereinafter, transmission and reception of the PUCCH or PUSCH may be understood as transmission and reception of the UCI on the PUCCH or PUSCH.

Various embodiments of the disclosure are described based on the LTE communication system or the NR communication system, but the disclosure is not limited thereto and may be applied to various wireless communication systems for transmitting uplink control information. In addition, it is obvious that the disclosure is also applied optionally to an unlicensed band in addition to a licensed band.

Hereinafter, the disclosure may describe a signal transfer method in which higher layer signaling or higher signals are transferred from the base station to the LTE by using a downlink data channel of a physical layer or transmitted from the LTE to the bae station by using an uplink data channel of the physical layer. According to an embodiment, the higher layer signaling may include at least one of radio resource control (RRC) signaling, signaling based on an F1 interface between a centralized unit (CU) and a distributed unit (DU), a signal transfer method in which a signal is transferred through a media access control (MAC) control element (CE). In addition, according to an embodiment, the higher layer signaling or the higher signals may include system information, for example, a system information block (SIB), to be transmitted commonly to a plurality of the UEs.

FIG. 3 illustrates an example of a radio protocol structure of a wireless communication system of the disclosure. The exemplified radio protocol structure may be a radio protocol structure of an LTE or NR communication system.

Referring to FIG. 3, a radio protocol includes a PDCP layer 310, an RLC layer 320, a MAC layer 330, and a PHY layer 340 in each of a UE and a base station. Although not shown in FIG. 3, a user plane in the NR system may further include an SDAP layer for QoS management.

A main function of the PDCP layer 310 may include some of the following functions.

- Header compression and decompression function (header compression and decompression: ROHC only
- User data transfer function (transfer of user data)
- In-sequence delivery function (in-sequence delivery of upper layer PDUs)
- Out-of-sequence delivery function (out-of-sequence delivery of upper layer PDUs)
- Reordering function (PDCP PDU reordering for reception)
- Duplication detection function (duplicate detection of lower layer SDUs)
- Retransmission function (retransmission of PDCP SDUs)
- Ciphering and deciphering function (ciphering and deciphering)
- Timer-based SDU discarding function (timer-based SDU discard in uplink)

A main function of the RLC layer 320 may include some of the following functions.

- Data transfer function (transfer of upper layer PDUs)
- In-sequence delivery function (in-sequence delivery of upper layer PDUs)
- Out-of-sequence delivery function (out-of-sequence delivery of upper layer PDUs)
- ARQ function (error correction through ARQ)
- Concatenation, segmentation, and reassembly function (concatenation, segmentation and reassembly of RLC SDUs)
- Re-segmentation function (re-segmentation of RLC data PDUs)
- Reordering function (reordering of RLC data PDUs)
- Duplication detection function (duplicate detection)
- Error detection function (protocol error detection)
- RLC SDU discarding function (RLC SDU discard)
- RLC re-establishment function (RLC re-establishment)

The MAC layer 330 may be coupled to several RLC layer devices constructed in one LTE, and a main function of the MAC may include some of the following functions.

- Mapping function between logical channel and transport channel (Mapping between logical channels and transport channels)
- Multiplexing and demultiplexing function of MAC SDUs (multiplexing and demultiplexing function (multiplexing/demultiplexing of MAC SDUs)
- Scheduling information reporting function (scheduling information reporting)
- Hybrid automatic repeat and reQuest (HARQ) function (error correction through HARQ)
- Priority handling function between logical channels (priority handling between logical channels of one UE)
- Priority handling function between UEs (priority handling between UEs by means of dynamic scheduling)
- Multimedia broadcast and multicast service (MBMS) service Identification function
- Transport format selection function (transport format selection)
- Padding function (padding)
- MAC control element (CE): the MAC layer 330 may be used in control information transmission. According to embodiments of the disclosure, a power headroom report may be used in the MAC layer 330.

The PHY layer 340 may perform channel coding and modulation on higher layer data (data corresponding to a MAC PDU), and may perform an operation in which an OFDM symbol is created and transmitted through a radio channel or in which demodulation and channel coding are performed on the OFDM symbol received through the radio channel and then are delivered to a higher layer. In this case, data received from a higher layer, i.e., the MAC layer 330, may be referred to as a transport block (TB). According to an embodiment, the PHY layer 340 of the LTE may calculate transmit power, for transmission of an uplink signal. According to an embodiment, the PHY layer 340 of the UE may obtain a value of a power headroom, for power headroom reporting (PHR) transmission.

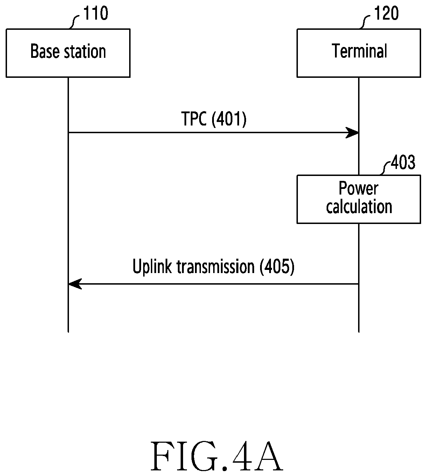

FIG. 4A illustrates an example of signaling for uplink transmission depending on a transmit power control command according to embodiments of the disclosure. A UE may transmit uplink data and/or control information to a base station. The base station may be, for example, the base station 110 of FIG. 1. The UE may be, for example, the terminal 120 of FIG. 1.

Referring to FIG. 4A, in operation 401, the base station may transmit a transmit power control (TPC) command to the LTE through DCI. The LTE may receive from the base station the TPC command included in the DCI. The UE may identify an offset value depending on the TPC command.

In operation 403, the UE may calculate uplink power. The uplink power may mean transmit power of the UE when an uplink signal is transmitted. Since the uplink power is associated with resource allocation, the base station is required to control power of the LTE. Through transmission of the TPC command, the base station may control a parameter used for the transmit power calculation of the UE. The UE may obtain the transmit power by applying the parameter in a specified equation. The specified equation may be defined according to a type of the uplink signal. According to an embodiment, the uplink signal may include a physical uplink shared channel (PUSCH). According to an embodiment, the uplink signal may include a physical uplink control channel (PUCCH). According to an embodiment, the uplink signal may include a sounding reference signal (SRS). Although a power control process of the uplink signal is described in the disclosure hereinafter by taking the PUSCH for example, embodiments of the disclosure may be applied in the same or similar manner to not only PUSCH transmission but also PUCCH transmission and SRS transmission.

In operation 405, the UE may transmit the uplink signal to the base station. The base station may receive the uplink signal from the LTE. The LTE may transmit the uplink signal to the base station according to the transmit power calculated in operation 403.

In case of the PUSCH, a power calculation formula used by the LTE in operation 403 may be as follows. Equation 1 means a PUSCH calculation formula in an LTE communication system, and Equation 2 means a PUSCH calculation formula in an NR communication system.

【Equation 1】

$$P_{\text{PUSCH},c}(i) = \min \begin{cases} P_{\text{CMAX},c}(i), \\ 10\log_{10}\left(M_{\text{PUSCH},c}(i)\right) + P_{\text{O}_{\text{PUSCH}},c}(j) + \alpha_c(j)\cdot PL_c + \Delta_{\text{TF},c}(i) + f_c(i) \end{cases}$$

Herein, $P_{\text{PUSCH},c}(i)$ denotes UE transmit power at a subframe i and a serving cell c. $P_{\text{CMAX},c}(i)$ denotes maximum transmit power configured at the subframe i and the serving cell c. $M_{\text{PUSCH},c}(i)$ denotes a bandwidth. $P_{\text{O\_PUSCH},c}(j)$ denotes nominal power. $PL_c$ denotes a pathloss. $\Delta_{TF,c}(i)$ denotes an offset depending on a modulation scheme. $f_c(i)$ denotes a parameter (hereinafter, a correction parameter) to which a correction value depending on the TPC command is applied.

【Equation 2】

$$P_{\text{PUSCH},b,f,c}(i, j, q_d, l) =$$

$$\min \begin{cases} P_{\text{CMAX},f,c}(i), \\ P_{\text{O\_PUSCH},b,f,c}(j) + 10\log_{10}\left(2^{\mu}\cdot M_{\text{RB},b,f,c}^{\text{PUCH}}(i)\right) + \alpha_{b,f,c}(j)\cdot PL_{b,f,c}(q_d) + \Delta_{\text{TF},b,f,c}(i) + f_{b,f,c}(i, l) \end{cases}$$

Herein, $P_{\text{PUSCH},b,f,c}(i,j,q_d,l)$ denotes LTE transmit power for a PUSCH transmission occasion i, an index j, an RS index qd, and a power control adjusting state index l at a UL Bandwidth Part (BWP) b, a carrier f, and a serving cell c of the uplink signal. $P_{\text{CMAX},f,c}(i)$ denotes maximum transmit power configured at the PUSCH carrier f, the transmission occasion i, and the serving cell c. $M_{\text{RB},b,f,c}^{\text{PUSCH}}(i)$ denotes a bandwidth at the UL BWP carrier b, the carrier f, and the serving cell c. $P_{\text{O\_PUSCH},b,f,c}(j)$ denotes nominal power. $PL_{b,f,c}(q_d)$ denotes a pathloss for the RS index qd at the UL BWP carrier b, the carrier f, and the serving cell c. $\Delta_{TF,b,f,c}(i)$ denotes an offset depending on a modulation scheme. $f_{b,f,c}(i, l)$ denotes a correction parameter to which the power control value depending on the TPC command is applied.

Simply, values, such as P0_PUSCH, $\alpha$, or the like denote parameters configured by the base station through radio resource control (RRC), M denotes a size of an uplink resource allocated by the base station, and PL denotes a pathloss value. The base station may control power of the UE through transmit power control (TPC) information in an uplink grant. For example, when a UE power control state configured by the base station through the RRC is accumulation, the LTE may accumulate a decibel (hereinafter, dB) value indicated by a TPC index and a value of 'correction parameter (e.g., $f_c(i), f_{b,f,c}(i, l)$)' to a calculation item. For example, when the UE power control state configured by the base station through the RRC is absolute, the value of the correction parameter (e.g., $f_c(i), f_{b,f,c}(i, l)$) may be set to the dB value indicated by the index value of the TPC.

For example, when the LTE power control state is accumulation, the calculation formula of the correction parameter is as follows. Herein, $\delta_{\text{PUCCH},b,f,c}(i, l)$ denotes the correction parameter.

【Equation 3】

$$f_{b,f,c}(i, l) = f_{b,f,c}(i - i_0, l) + \sum_{m=0}^{C(D_i)-1} \delta_{\text{PUSCH},b,f,c}(m, l)$$

For example, when the UE power control state is absolute, the calculation formula of the correction parameter is as follows. Herein, $\delta_{\text{PUCCH},b,f,c}(i, l)$ denotes the correction parameter.

【Equation 4】

$$f_{b,f,c}(i, l) = \delta_{\mathrm{PUSCH},b,f,c}(i, l)$$

$\delta_{\mathrm{PUCCH},b,f,c}(i, l)$ may be determined as indicated by a value of a TPC command field. For example, $\delta_{\mathrm{PUCCH},b,f,c}(i, l)$ may be defined based on Table 1 below.

Meanwhile, the current standard is defined such that the TPC command which increases power is ignored when the UE has already reached the maximum power.

[Table 1]

| TPC Command Field | Accumulated $\delta_{\mathrm{PUSCH},b,f,c}$ or $\delta_{\mathrm{SRS},b,f,c}$ [dB] | Absolute $\delta_{\mathrm{PUSCH},b,f,c}$ or $\delta_{\mathrm{SRS},b,f,c}$ [dB] |
|---|---|---|
| 0 | -1 | -4 |
| 1 | 0 | -1 |
| 2 | 1 | 1 |
| 3 | 3 | 4 |

[Table 2]

<LTE TS 36.213 5.1.1.1>
-If UE has reached $P_{\mathrm{CMAX},c}(i)$ for serving cell $c$, positive TPC commands for serving cell $c$ shall not be accumulated
-If UE has reached minimum power, negative TPC commands shall not be accumulated <NR TS 38.213 7.1.1>
-If the UE has reached maximum power for active UL BWPb of carrier $f$ of serving cell $c$ at PUSCH transmission

occasion $i - i_0$ and $\sum_{m=0}^{C(D_i)-1} \delta_{\mathrm{PUSCH},b,f,c}(m, l) \geq 0$ , then $f_{b,f,c}(i, l) = f_{b,f,c}(i - i_{0}, l)$

-If UE has reached minimum power for active UL BWP$b$ of carrier $f$ of serving cell c at PUSCH transmission

occasion $i - i_0$ and $\sum_{m=0}^{C(D_i)-1} \delta_{\mathrm{PUSCH},b,f,c}(m, l) \leq 0$ , then $f_{b,f,c}(i, l) = f_{b,f,c}(i - i_{0}, l)$

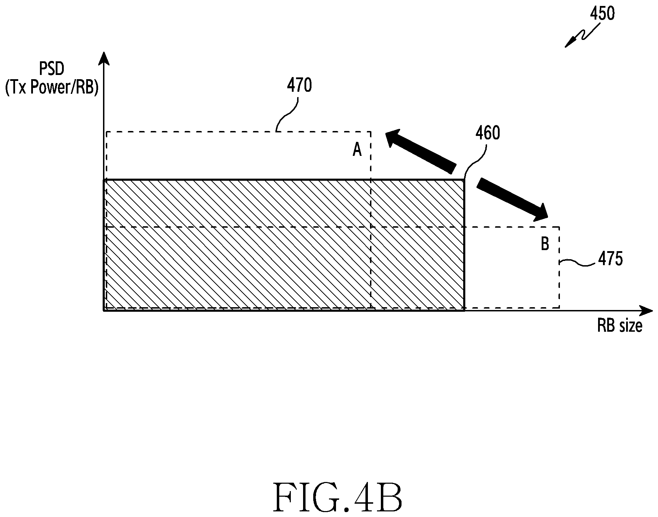

The UE power control performed by the base station through the TPC field may be performed by using a correction parameter, i.e., a value f (e.g., $f_c(i)$ or $f_{b,f,c}(i, l)$). In this case, a value controlled through the TPC command is for controlling power spectral density (PSD) which is transmit power of a unit resource. Therefore, the PSD may differ depending on a resource allocation size even in case of the maximum transmit power of the LTE. Referring to FIG. 4B, a graph 450 represents a relationship between the PSD and the resource allocation. A horizontal axis of the graph 450 represents an RB size, and a vertical axis thereof represents the PSD.

Even if the UE maintains transmission of maximum power, the PSD value may vary depending on a resource allocation size. The graph 450 may imply that uplink reception performance may vary by changing the PSD value even in a state where the UE maintains transmission of maximum power. A first resource allocation 460 indicates a maximum transmittable resource (resource block (RB)) size with respect to the current PSD. Hereinafter, a case where a transmit power control state is an accumulation state is described for example. A second resource allocation 470 implies a resource allocation which is possible with maximum transmit power of the UE, in a state where the PSD of the UE increases by 1 dB with respect to the current PSD. A third resource allocation 475 implies a resource allocation which is possible with maximum transmit power of the UE in a state where maximum transmit power is maintained and the PSD of the UE decreases by 1dB with respect to the current PSD.

The first resource allocation 460, the second resource allocation 470, and the third resource allocation 475 are all identically in a state where transmission is performed with maximum power of the UE, but the number of RBs allocated by the base station and a modulation and coding scheme (MCS) value may vary depending on the PSD. If the maximum power is identical, allocation with a low RB is required in order for the base station to effectively allocate resources in terms of cell capacity. If the base station allocates a smaller number of resources to a specific LTE, this is because the base station is able to allocate surplus resources to other LTEs. For effective resource allocation, the base station shall be able to freely control transmit power of the UE in any direction. However, in the conventional standard, as descried above, if the UE is already at maximum power, a value depending on a TPC command is not applied. Therefore, it is not allowed to change the first resource allocation 460 of the graph 450 to the second resource allocation 470.

To increase the PSD, the base station shall intentionally reduce a size of a resource allocated to the UE to produce a state where power remains. The base station shall set a TPC power increase value when transmitting an uplink grant with a reduced resource size. Herein, there is a problem in that the base station is not able to accurately know a pathloss and transmit power of the UE every moment. Although PHR information may be periodically received, a value of the pathloss of the UE persistently changes even during that period due to a UE movement and a channel change. Therefore, from a perspective of the base station, it is difficult to accurately predict a certain level of the allocation resource size to be reduced so that power of the UE remains. If the UE still maintains maximum transmit power even if the allocation resource size is reduced partially, the TPC increase command is ignored and the PSD is not increased. This case causes a delay in LTE power control. To prevent such a delay, the base station has no choice but to conservatively reduce an uplink resource allocation size, in order to intentionally increase TPC power. This causes an uplink performance loss. In summary, the TPC is power control per unit resource, whereas UE maximum power is power depending on the entire resource. Embodiments of the disclosure propose an apparatus and method for reducing inefficiency which may occur, because the UE uniformly ignores the TPC even if it is possible to increase the TPC by reducing resource allocation.

In embodiments of the disclosure, operations of a base station and UE are proposed to solve the aforementioned two problems. Embodiments of the disclosure propose a new standard for solving a problem of difficulty in increasing of the PSD when UE reaches maximum power and a problem of inaccuracy of PHR information. Embodiments of the disclosure maintain compatibility with the existing standard, and are commonly applicable to both 3GPP LTE and NR standards.

TPC command operation

Embodiments of the disclosure propose various methods for avoiding a result in which a PSD does not increase due to maximum transmit power and a TPC command is not reflected. Even if a LTE reaches maximum transmit power and a power control value depending on the TPC command is a positive number, transmit power for an uplink signal of the UE may be calculated using the power control value depending on the TPC command. In the disclosure, it is referred that the UE which calculates the transmit power by applying the TPC without an upper limit of the maximum power is referred to as a UE in which an unrestricted TPC is configured, but may be replaced with an expression having a technically equivalent meaning. For example, the UE which calculates the transmit power by applying the TPC without the upper limit of the maximum power may be referred to as a UE supporting an unrestricted-PositiveTPC. In addition, for example, the UE which calculates the transmit power by applying the TPC without the upper limit of the maximum power may be referred to as a UE configured to an unrestricted TPC state. In addition, for example, the LTE which calculates the transmit power by applying the TPC without the upper limit of the maximum power may receive an indictor indicating the unrestricted TPC state.

1) Identifying capability information

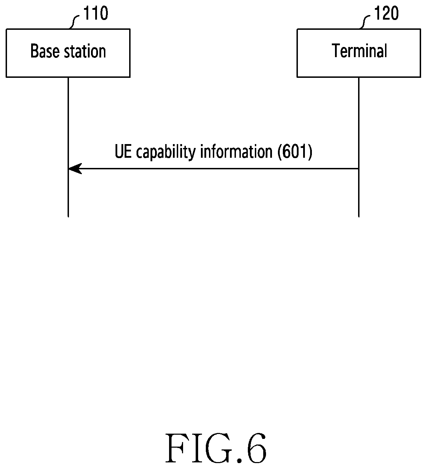

If the UE is able to apply the TPC command without the maximum power limit, the base station does not need to conservatively allocate resources to increase the PSD of the UE. The base station needs to know whether the UE supports such a new function. Therefore, the UE may transmit capability information to the base station. The LTE may transmit, to the base station, information indicating that it is possible to apply an increasing TPC without the upper limit of the maximum power, in other word, indicating that an unrestricted TPC is supported. An example of the capability information will be described below in detail with reference to FIG. 6.

In order to identify an operation of applying a TPC between the existing UE and a new UE supporting the unrestricted-PositiveTPC, equations conforming to the 3GPP standard may be modified as follows. The existing UE not supporting this function (e.g., a legacy UE) is blocked from a TPC increasing function when reaching maximum transmit power in the same manner as in the existing standard operation. However, the new UE supporting the unrestricted-PositiveTPC is excluded in an operation of an added conditional statement, applies a dB value indicated by the TPC and thus may increase a correction parameter value (e.g., $f_c(i)$ or $f_{b,f,c}(i, l)$). The base station may freely increase the PSD of the UE regardless of whether the UE has reached maximum power and without a concern about an extent of restricting an allocation resource size.

[Table 3]

| <LTE TS 36.213 5.1.1.1> |
|---|
| -If UE has reached $P_{CMAX,c}(i)$ for serving cell $c$, and if the UE does NOT indicate a capability to support unrestricted-PositiveTPC positive TPC commands for serving cell $c$ shall not be accumulated |

(continued)

| <NR TS 38.213 7.1.1> |
|---|
| - If the UE has reached maximum power for active UL BWPb of carrier $f$ of serving cell c at PUSCH transmission occasion $i - i_0$ and $\sum_{m=0}^{C(D_i)-1} \delta_{\mathrm{PUSCH},b,f,c}(m, l) \geq 0$, and if the UE does NOT indicate a capability to support unrestricted-PositiveTPC, then $f_{b,f,c}(i, l) = f_{b,f,c}(i - i_0, l)$ |

Although an example for the maximum power restriction and the TPC increase is described in Table 3, embodiments of the disclosure may also be equally applied to minimum power and a negative TPC command in the same or similar manner. In order not to accumulate the TPC command, or to apply a correction parameter value equally to a correction parameter value of a previous transmission occasion, the UE may determine whether the LTE supports a TPC unrestricted capability (e.g., 'unrestricted-negativeTPC').

2) Configuration

The TPC unrestricted function may be set to the LTE by using a configuration method. The base station may determine whether the UE is capable of supporting the TPC unrestricted function according to an implementation method of the base station. For example, the base station may determine whether to set the TPC unrestricted function of the LTE, based on: 1) capability information; or 2) different information (e.g., standard release supported by the UE, nominal power) related to the UE.

The base station may transmit information indicating the TPC unrestricted function to the LTE. According to an embodiment, the base station may set the TPC unrestricted function to the LTE through higher layer signaling. For example, the base station may instruct the LTE to support the configuration of the TPC unrestricted function through an information element (IE) of an RRC parameter. The LTE may identify whether the TPC unrestricted function is configured through a corresponding parameter. When the TPC unrestricted function is set to the UE, even if transmit power of the UE has reached maximum power and a power control value depending on the TPC is a positive number, the UE may determine transmit power by applying the power control value.

That is, in some embodiments, even if the UE supports the TPC unrestricted function, the base station may or may not be selectively configured with the unrestricted TPC. That is, even if 'unrestricted-PositiveTPC' is transmitted as capability information of the UE, unlike in the case 1), the base station may not be configured with the unrestricted TPC.

[Table 4]

| <LTE TS 36.213 5.1.1.1> |
|---|
| - If UE has reached $P_{\mathrm{CMAX},c}(i)$ for serving cell $c$, and if the UE is not configured with unrestricted-PositiveTPC, positive TPC commands for serving cell $c$ shall not be accumulated |
| <NR TS 38.213 7.1.1> |
| - If the UE has reached maximum power for active UL BWP$b$ of carrier $f$ of serving cell c at PUSCH transmission occasion $i - i_0$ and $\sum_{m=0}^{C(D_i)-1} \delta_{\mathrm{PUSCH},b,f,c}(m, l) \geq 0$, and if the UE is not configured with unrestricted-PositiveTPC, then $f_{b,f,c}(i, l) = f_{b,f,c}(i - i_0, l)$ |

Although an example of the maximum power restriction and the TPC increase is described in Table 4, embodiments of the disclosure may also be equally applied to minimum power and a negative TPC command in the same or similar manner. In order not to accumulate the TPC command, or to apply a correction parameter value equally to a correction parameter value of a previous transmission occasion, the UE may determine whether a TPC unrestricted configuration (e.g., 'unrestricted-negativeTPC') is configured to the UE.

3) DCI format

The TPC command conforming to the existing standard has been described for example in the case 1) and the case 2). However, unlike LTE capability information transmission or RRC signaling, embodiments of the disclosure may be performed through a new type of TPC. According to an embodiment, when maximum power is restricted, a TPC command which is not restricted from an increase in a correction parameter may be defined. The base station may transmit a new TPC command to the UE. The UE may identify a format by which the TPC command is transferred, and may determine whether to configure an unrestricted TPC function according to the format. In addition, according to an embodiment, DCI may include a new field indicating the unrestricted TPC function. The UE may identify a field of the DCI used to transfer the TPC command, and may determine whether to configure the unrestricted TPC function according to a corresponding format.

[Table 5]

| <LTE TS 36.213 5.1.1.1><br>- If LTE has reached $P_{CMAX,c}(i)$ for serving cell $c$, and if DCI format x_y does not include unrestricted-PositiveTPC, positive TPC commands for serving cell c shall not be accumulated |
| --- |
| <NR TS 38.213 7.1.1><br>- If the UE has reached maximum power for active UL BWPb of carrier $f$ of serving cell c at PUSCH transmission occasion $i$ - $i_0$ and $\sum_{m=0}^{C(D_i)-1} \delta_{\text{PUSCH},b,f,c}(m, l) \geq 0$ , and if DCI format x_y does not include unrestricted-PositiveTPC, then $f_{b,f,c}(i, l) = f_{b,f,c}(i - i_0, l)$ |

Although an example of the maximum power restriction and the TPC increase is described in Table 5, embodiments of the disclosure may also be equally applied to minimum power and a negative TPC command in the same or similar manner. In order not to accumulate the TPC command, or to apply a correction parameter value equally to a correction parameter value of a previous transmission occasion, the UE may determine whether a TPC unrestricted configuration (e.g., 'unrestricted-negativeTPC') is configured to the UE.

Although UE capability information transmission or RRC signaling or DCI-based indication is described, embodiments of the disclosure may support the unrestricted TPC configuration by using another method in addition to the aforementioned methods. That is, irrespective of maximum power, any signaling for increasing transmit power according the TPC may be understood as an embodiment of the disclosure.

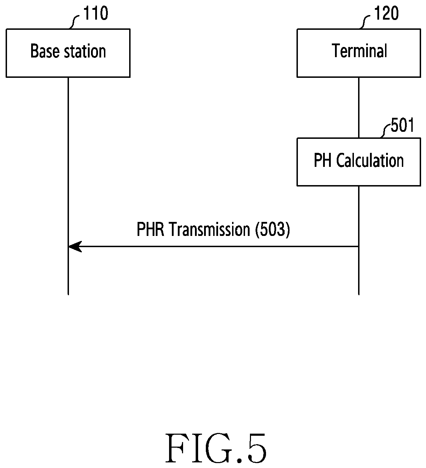

FIG. 5 illustrates an example of power headroom report (PHR) transmission according to embodiments of the disclosure. PHR may mean control information of a MAC layer defined in order for a base station knows surplus power of a LTE. The base station may be, for example, the base station 110 of FIG. 1. The LTE may be, for example, the terminal 120 of FIG. 1.

Referring to FIG. 5, in operation 501, the LTE may calculate a power headroom (PH). The UE may obtain the PH indicating a difference between maximum transmit power and estimated power for uplink transmission. The PH indicates power additionally allocatable in the UE, in other word, surplus power of the UE. A positive PH value indicates that there is surplus power as much as a positive value. A negative PH value indicates that power is insufficient as much as a negative value even if the UE entirely uses maximum transmit power. The UE may calculate the PH for uplink transmission. According to an embodiment, the uplink transmission may include UL SCH transmission (or PUSCH transmission). The PH may be referred to as a Type 1 PH. According to an embodiment, the uplink transmission may include PUCCH transmission. The PH may be referred to as a Type 2 PH. According to an embodiment, the uplink transmission may include SRS transmission. The PH may be referred to as a Type 3 PH. When a MAC entity of the UE has a UL resource, the MAC entity may obtain a PH for an uplink carrier of a corresponding cell.

In operation 503, the UE may perform PHR transmission. The UE may transmit the PHR to the base station. The PHR may include the PH obtained in operation 501. Although not shown in FIG. 5, the base station may estimate supportable maximum transmit power of uplink, based on the PH of the LTE, and may perform resource allocation within a range not deviated from the maximum transmit power. The base station may perform power control of the UE, by using methods, such as a TPC command, a modulation and coding scheme (MCS) level indication, or bandwidth allocation.

PHR information is MAC layer information, and may be transferred from the UE to the base station through a MAC CE. The PHR MAC CE may include one or more PHs. Herein, the PH may be indicated using 6 bits. A value indicated by reported bits indicates a PH level. The PH of the PHR is configured using information of 6 bits commonly in LTE and NR.

For example, in the LTE system, a PH of a PHR MAC CE may be configured as shown in Table 5-1 below.

【Table 5-1】

| R | R | PH | | | Oct 1 |
|---|---|---|---|---|---|

For example, in the NR system, a PH of a single entry PHR MAC CE may be configured as shown in Table 6 below.

【Table 6】

| R | R | PH (Type 1, PCell) |
|---|---|---|
| R | R | $P_{CMAX,f,c}$ |

It is obvious that embodiments of the disclosure are applicable equally to not only Table 5 or Table 6 but also other types of PHR MAC CEs using a PH (e.g., a dual connectivity PHR MAC CE or a multiple entry PHR MAC CE).

Values of 0 to 63 of a power headroom index (i.e., a reported value) indicate a power headroom level, and the PH level indicates a power headroom range in units of dB. However, such a PHR has a problem in that it does not include all of maximum and minimum transmit power information of the UE. In particular, when the UE is located in a strong electric field, an accurate power surplus value of the UE cannot be transferred to the base station. Referring to Table 7 of the LTE system, a PH index 63 indicates a case where the PH value is greater than or equal to 40dB. When maximum power of the UE is 23dBm (e.g., according to power class 3 in 3GPP standard TS 36.101), if current transmit power of the LTE is less than -17dBm, the LTE is not able to transfer an accurate power surplus value to the base station.

[Table 7]

| Reported value | Measured quantity value (dB) |
|---|---|
| POWER_HEADROOM_0 | $-23 \le PH < -22$ |
| POWER_HEADROOM_1 | $-22 \le PH < -21$ |
| POWER_HEADROOM_2 | $-21 \le PH < -20$ |
| POWER_HEADROOM_3 | $-20 \le PH < -19$ |
| POWER_HEADROOM_4 | $-19 \le PH < -18$ |
| POWER_HEADROOM_5 | $-18 \le PH < -17$ |
| ... | ... |
| POWER_HEADROOM_57 | $34 \le PH < 35$ |
| POWER_HEADROOM_58 | $35 \le PH < 36$ |
| POWER_HEADROOM_59 | $36 \le PH < 37$ |
| POWER_HEADROOM_60 | $37 \le PH < 38$ |
| POWER_HEADROOM_61 | $38 \le PH < 39$ |
| POWER_HEADROOM_62 | $39 \le PH < 40$ |

Similarly, referring to Table 8 of the NR system, the PH index 63 indicates a case where the PH value is greater than or equal to 38dB. When maximum power of the UE is 23dBm (e.g., according to power class 3 in 3GPP standard TS 38.101-1), if current transmit power of the LTE is less than -15dBm, the LTE cannot transfer an accurate power surplus value to the base station.

[Table 8]

| Reported value | Measured quantity value (dB) |
|---|---|
| POWER_HEADROOM_0 | PH < -32 |
| POWER_HEADROOM_1 | $-32 \leq PH < -31$ |
| POWER_HEADROOM_2 | $-31 \leq PH < -30$ |
| POWER_HEADROOM_3 | $-30 \leq PH < -29$ |
| ... | ... |
| POWER_HEADROOM_53 | $20 \leq PH < 21$ |
| POWER_HEADROOM_54 | $21 \leq PH < 22$ |
| POWER_HEADROOM_55 | $22 \leq PH < 24$ |
| POWER_HEADROOM_56 | $24 \leq PH < 26$ |
| POWER_HEADROOM_57 | $26 \leq PH < 28$ |
| POWER_HEADROOM_58 | $28 \leq PH < 30$ |
| POWER_HEADROOM_59 | $30 \leq PH < 32$ |
| POWER_HEADROOM_60 | $32 \leq PH < 34$ |
| POWER_HEADROOM_61 | $34 \leq PH < 36$ |
| POWER_HEADROOM_62 | $36 \leq PH < 38$ |
| POWER_HEADROOM_63 | $PH \geq 38$ |

Considering that the minimum transmit power value of the UE defined in the standard is -40dBm, transmit power corresponding to -18dBm to -40dBm in LTE and -16dBm to -40dBm in NR corresponds to the PH index 63. Therefore, there is a problem in that it is difficult for the base station to accurately recognize actual transmit power of the UE corresponding to the above range. In addition, as shown in Table 8, when the PH index is greater than or equal to 55 in NR, a range of a PH indicated by a corresponding index is defined broadly to be 2dB not 1dB. Therefore, there is a problem in that the base station is not able to accurately know transmit power of the UE.

Embodiments of the disclosure propose a method for transferring PHR information in greater detail, for the aforementioned problems, that is, for more accurately estimating the transmit power of the UE. That is, the disclosure and embodiments of the disclosure propose a new standard for solving a problem in which PHR information is inaccurate. The standard proposed in the disclosure maintains compatibility with the existing standard, and may be commonly applied to both 3GPP LTE and NR standards.

The PHR according to embodiments of the disclosure may have a high resolution to transfer a more detailed PH than the conventional PH transferred using 6 bits. In addition, a method for increasing a range indicated by a PH value is described to avoid a case (e.g., an upper or lower limit) where a PHR according to embodiments of the disclosure is not currently fed back since a PH value is expressed by an index depending on the range. Hereinafter, a PHR including more detailed information than the conventional PH indicted using 6 bit is referred to as a modified PHR in the description of the disclosure. However, it is obvious that other terms representing the same technical meaning such as a wide range PHR, a detailed PHR, an extended PHR, or an additional PHR, or the like may be used instead of the modified-PHR.

In order to solve a problem in that PHR information is inaccurate in the existing standard, embodiments of the disclosure propose a format of a PHR MAC CE.

【Table 9】

According to embodiments of the disclosure, the PHR format shown in Table 9 utilizes two reserved (R) bits which exist in the legacy PHR format of Table 5-1 and Table 6 to maintain compatibility with the legacy standard and to extend information. In Table 5-1, information indicated by 'modified (M)' value may indicate whether to use a modified-PHR according to embodiments of the disclosure. When using the modified-PHR, M may be set to 1, and otherwise, M may be set to 0. Information indicated by a 'positive (P)' value may indicate a sign value of the PHR. When P=1, it may mean a positive sign, and when P=0, it may mean a negative sign. It is valid only when M=1, and it may be set to P=0 when M=0.

Meanwhile, unlike in Table 9, the base station may individually set the modified-PHR to the UE, and the UE may be configured to include only the value 'P' without the value 'M'. Referring to Table 10, the PHR may additionally use 1 bit indicating a sign to indicate a PH in the range of -63dB to 63dB. 'R' may mean a reserved bit. A newly proposed PHR format may be configured to include a 1-bit 'positive(P)' indicating a sign and a 6-bit 'PH'. According to a configuration of the base station, the UE may transmit the PHR according to Table 10 to the base station.

【Table 10】

When introducing the modified-PHR newly proposed in the disclosure, a table, such as Table 11 may be configured.

[Table 11]

| Reported value | Measured quantity value (dB) | |
|---|---|---|
| | P = 0 | P=1 |
| POWER_HEADROOM_0 | $-1 \leq PH < 0$ | $0 \leq PH < 1$ |
| POWER_HEADROOM_1 | $-2 \leq PH < -1$ | $1 \leq PH < 2$ |
| POWER_HEADROOM_2 | $-3 \leq PH < -2$ | $2 \leq PH < 3$ |
| POWER_HEADROOM_3 | $-4 \leq PH < -3$ | $3 \leq PH < 4$ |
| ... | ... | ... |
| POWER_HEADROOM_53 | $-54 \leq PH < -53$ | $53 \leq PH < 54$ |
| POWER_HEADROOM_54 | $-55 \leq PH < -54$ | $54 \leq PH < 55$ |
| POWER_HEADROOM_55 | $-56 \leq PH < -55$ | $55 \leq PH < 56$ |
| POWER_HEADROOM_56 | $-57 \leq PH < -56$ | $56 \leq PH < 57$ |
| POWER_HEADROOM_57 | $-58 \leq PH < -57$ | $57 \leq PH < 58$ |
| POWER_HEADROOM_58 | $-59 \leq PH < -58$ | $58 \leq PH < 59$ |
| POWER_HEADROOM_59 | $-60 \leq PH < -59$ | $59 \leq PH < 60$ |
| POWER_HEADROOM_60 | $-61 \leq PH < -60$ | $60 \leq PH < 61$ |

(continued)

| Reported value | Measured quantity value (dB) | |
|---|---|---|
| | P = 0 | P=1 |
| POWER_HEADROOM_61 | -62 ≤ PH < -61 | 61 ≤ PH < 62 |
| POWER_HEADROOM_62 | -63 ≤ PH < -62 | 62 ≤ PH < 63 |
| POWER_HEADROOM_63 | PH < -63 | PH ≥ 63 |

Through the modified-PHR, a LTE power headroom value of -63dB to +63dB is expressed with an interval of 1dB, and there is an advantage in that the PHR index is directly mapped to a headroom value intuitively unlike in the conventional standard. Accordingly, even if the LTE of the power class 3 described above for example performs transmission with minimum transmit power, the UE may transmit a PHR including an accurate PH value (e.g., the PH index 63) to the base station.

FIG. 6 illustrates an example of LTE capability information transmission according to embodiments of the disclosure. Capability information means a UE capability transmitted by a UE to a base station. The base station may be, for example, the base station 110 of FIG. 1. The UE may be, for example, the terminal 120 of FIG. 1.

Referring to FIG. 6, in operation 601, the LTE may transmit capability information to the base station. According to an embodiment, the LTE may transmit the capability information to the base station through RRC signaling. The capability information may include information indicating whether to support a function according to embodiments of the disclosure. According to an embodiment, the capability information may include information indicating whether the UE supports an unrestricted TPC configuration. That is, when the UE has a maximum power restriction and when a TPC power value is a positive number, the LTE may transmit information indicating whether not to apply the TPC power value or otherwise, even if the UE has the maximum power restriction, whether to apply the TPC power value. In addition, according to an embodiment, capability information may include information indicating whether the LTE supports the modified-PHR. That is, the LTE may include information indicating whether it is possible to transmit a PHR defined to cover a wider range of a PH than power information indicated with 6 bit or whether the PHR is transmitted using the existing 6 bits.

An unrestricted TPC function has been described with reference to FIG.4A and FIG. 4B due to a problem in that a PSD increase is difficult when the UE reaches maximum power. For reliable power control when a TPC is not reflected due to power restriction, the base station has to conservatively perform resource allocation so as not to reach maximum transmit power. Despite conservative resource allocation, the PSD increase may fail due to an unpredictable situation, such as a change in UE pathloss (PL). However, if the UE supports an unrestricted TPC function, the base station does not have to conservatively allocate a resource. This is because there is no need to consider that the TPC is not reflected due to the power restriction. Therefore, in order for the LTE not to perform the TPC non-reflection due to the maximum power restriction, this may need to be reported to the base station. According to embodiments of the disclosure, a new UE capability item called unrestricted-PositiveTPC is defined. When the LTE supports a function of the disclosure, this item value is set to 'supported' and transferred to the base station. In case of an unsupported UE, the unrestricted-PositiveTPC item is not present in UE capability.

In case of LTE, the unrestricted-PositiveTPC item may be added to a feature group indicator supported by the UE as in the example of Table 12.

[Table 12]

| Index of indicator (bit number) | Definition (description of the supported functionality, if indicator set to one) | Notes | If indicated "Yes" the feature shall be implemented and successfully tested for this version of the specification | FFDD/ TDD diff |
|---|---|---|---|---|
| 41 | Measurement reporting event: Event B1 - Neighbour > threshold for UTRAN FDD, if the UE supports UTRAN FDD and has set bit number 22 to 1 | - If a category M1 or M2 LTE does not support this feature group, this bit shall be set to 0. | Yes for FDD, unless UE has set bit number 15 to 1 | YYes |

(continued)

| Index of indicator (bit number) | Definition (description of the supported functionality, if indicator set to one) | Notes | If indicated "Yes" the feature shall be implemented and successfully tested for this version of the specification | FFDD/ TDD diff |
|---|---|---|---|---|
| 42 | - DCI format 3a (TPC commands for PUCCH and PUSCH with single bit power adjustments) | - If a category M1 or M2 LTE supports this feature group, this bit shall be set to 1. For a LTE of all other categories, this bit shall be set to 0. | | YYes |
| 43 | unrestricted-PositiveTPC | If LTE supports unrestricted accumulation for PUSCH power control, this bit shall be set to 1. Otherwise, 0. | | NNo |
| 44 | modified-PHR | If LTE supports extended PHR, this bit shall be set to 1. Otherwise, 0. | | NNo |

In case of NR, the unrestricted-PositiveTPC item may be added to a LTE capability related specific information group as shown in Table 13. Meanwhile, Table 12 and Table 13 are examples, and claims of the disclosure are not limited to specific information locations and corresponding names indicated by the above table, and may include all of to-be-added items of a function, such as the unrestricted-PositiveTPC regardless of any location in LTE capability information transferred by the LTE to the base station.

【Table 13】

```
RF-Parameters information element

BandNR ::=              SEQUENCE {
    bandNR             FreqBandIndicatorNR,
    modifiedMPR-Behaviour      BIT STRING (SIZE (8))        OPTIONAL,
    mimo-ParametersPerBand     MIMO-ParametersPerBand
OPTIONAL,
    extendedCP         ENUMERATED {supported}       OPTIONAL,
    multipleTCI        ENUMERATED {supported}       OPTIONAL,
    bwp-WithoutRestriction     ENUMERATED {supported}
OPTIONAL,
```

| | | |
|---|---|---|
| bwp-SameNumerology | ENUMERATED {upto2, upto4} | |
| OPTIONAL, | | |
| bwp-DiffNumerology | ENUMERATED {upto4} | OPTIONAL, |
| crossCarrierScheduling-SameSCS | ENUMERATED {supported} | |
| OPTIONAL, | | |
| pdsch-256QAM-FR2 | ENUMERATED {supported} | |
| OPTIONAL, | | |
| pusch-256QAM | ENUMERATED {supported} | OPTIONAL, |
| ue-PowerClass | ENUMERATED {pc1, pc2, pc3, pc4} | OPTIONAL, |
| rateMatchingLTE-CRS | ENUMERATED {supported} | |
| OPTIONAL, | | |
| unrestricted-PositiveTPC | ENUMERATED {supported} | OPTIONAL, |
| modified-PHR | ENUMERATED {supported} | OPTIONAL, |
| … | | |

In order to support a modified-PHR, i.e., a PH of an additional range (e.g., -63dbm ~ 63dbm) other than a 6-bit PH, the LTE may newly add a modified-PHR item to each of LTE and NR as shown in Table 12 or Table 13. Accordingly, the UE may transfer to the base station whether a new function is supportable. This is because the PHR is associated with transmit power of the LTE, and the transmit power has effect on uplink resource allocation. In case of a LTE not supporting the modified-PHR, since a corresponding item is omitted from UE capability information, the base station may identify whether to support the modified-PHR for each UE. Herein, names of Table 12 and Table 13 and modified-PHR item are examples, and embodiments of the disclosure are not limited to a specific information location and a corresponding name indicated by Table 12 and Table 13. Embodiments of the disclosure may include all of to-be-added items of a function such as the modified-PHR regardless of any location in UE capability information transferred by the LTE to the base station.

The base station may receive capability information from the LTE. The base station may identify the capability information of the UE. The base station may allocate a resource to the UE, based on the capability information of the UE. According to an embodiment, when the base station supports an unrestricted-PositiveTPC of the UE, the UE may increase a PSD. The UE des not ignore the TPC and thus may increase transmit power. The base station may allocate a proper RB by considering the PSD to be increased. The base station may perform RB allocation without having to consider maximum power restriction. In other words, due to TPC restriction, there is no need to conservatively allocate the RB. Even if transmit power of the UE has reached maximum power, the UE may perform uplink transmission to one or more allocated RBs, through the increased PSD. In addition, according to an embodiment, when the UE supports the modified PHR, the base station may more accurately recognize surplus power of the LTE than the conventional case where 6 bits are used to indicate the PH. Therefore, the base station may more efficiently perform uplink power control of the UE. Since the base station is capable of specifically identifying surplus power in the UE, the base station may perform RB allocation by using a value more accurately reflecting a UE state, or may indicate an MCS level, or may generate a TPC command.

Although not shown in FIG. 6, in some embodiments, the UE may receive a capability enquiry message from the base station, before transmitting capability information to the base station. The capability enquiry message may be a message which requests for LTE capability information related to a radio access network (RAN). In addition, in some embodiments, the base station may store the UE capability information, and may transmit a confirmation message to the UE.

Although it is illustrated in FIG. 6 that the LTE transmits capability information to the base station to indicate modified PHR transmission, embodiments of the disclosure are not limited thereto. A method of supporting the modified PHR may be configured in various manners, such as an unrestricted TPC configuration. For example, the base station may perform RRC signaling to the LTE through a MAC CE or DCI, or the LTE may be configured to report a PH through a MAC CE defined as a modified PHR.

Embodiments of the disclosure propose a method for solving two problems which occur in the existing standard related to power control of the UE. Embodiments of the disclosure propose a new standard and a modification of the existing standard in order to solve a problem in that PHR information is inaccurate and a problem in that a PSD increase is difficult, in a maximum power transmission state of the UE. Through an unrestricted TPC function for solving the first problem, a degree of freedom for changing a PSD may increase in the base station even in the maximum power state of the UE. This is because the base station is not highly necessary to conservatively allocate an uplink resource. Accordingly, an uplink data rate may increase, and a performance loss caused by a power control delay may decrease. Through the modified PHR for solving the second problem, the base station may accurately obtain transmit power information of the UE, without considering uncertainty of a PHR due to an electric field of the UE or a great range error (or resolution) of the existing NR standard.

Through the standard proposed in the disclosure, the base station may more accurately perform the power control operation of the UE. In addition, embodiments of the disclosure may contribute to uplink data rate improvement, access reliability, or the like of the UE. In addition, apparatuses and methods proposed in the disclosure advantageously maintain compatibility with the existing standard and are applicable commonly to the 3GPP LTE and NR standards.

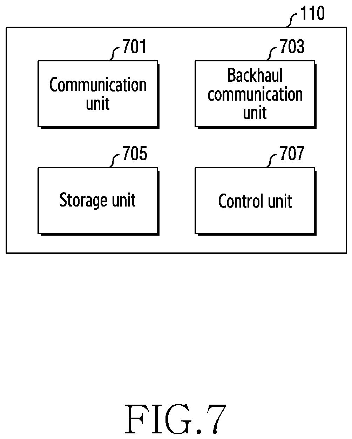

FIG. 7 illustrates a structure of a base station in a wireless communication system according to various embodiments of the disclosure. Hereinafter, the term '... unit', '... device', or the like implies a unit of processing at least one function or operation, and may be implemented in hardware or software or in combination of the hardware and the software.

Referring to FIG. 7, the base station includes a communication unit 701, a backhaul communication unit 703, a storage unit 705, and a control unit 707.

The communication unit 701 performs functions for transmitting/receiving a signal through a radio channel. For example, the communication unit 701 performs a function of conversion between a baseband signal and a bit-stream according to a physical layer standard of a system. For example, in data transmission, the communication unit 701 generates complex symbols by coding and modulating a transmitted bit-stream. In addition, in data reception, the communication unit 701 restores a received bit-stream through demodulation and decoding of a baseband signal. The communication unit 701 may be configured to perform at least one of operations of a transmitting end and operations of a receiving end, described with reference to FIGS. 1 to 6. According to an embodiment, the communication unit 701 may be configured to receive an uplink control channel (e.g., a PUCCH), based on a complex sequence (e.g., a ZC sequence).

The communication unit 701 up-converts a baseband signal into an RF signal and thereafter transmits it through an antenna, and down-converts an RF signal received through the antenna into a baseband signal. For this, the communication unit 701 may include a transmission filter, a reception filter, an amplifier, a mixer, an oscillator, a DAC, an ADC, or the like. In addition, the communication unit 701 may include a plurality of transmission/reception paths. Further, the communication unit 701 may include at least one antenna array constructed of a plurality of antenna elements. From a hardware aspect, the communication unit 701 may be constructed of a digital circuit and an analog circuit. The analog unit may be constructed of a plurality of sub-units according to operating power, operating frequency, or the like. According to an embodiment, the communication unit 701 may include a unit for forming a beam, i.e., a beamforming unit. For example, the communication unit 701 may include a massive MIMO unit (MMU) for beamforming.

The communication unit 701 may transmit and receive a signal. For this, the communication unit 701 may include at least one transceiver. For example, the communication unit 701 may transmit a synchronization signal, a reference signal, system information, a message, a control message, a stream, control information, data, or the like. In addition, the communication unit 701 may perform beamforming. In order to assign a directivity depending on a configuration of the control unit 707 to a signal to be transmitted/received, the communication unit 701 may apply a beamforming weight to the signal. According to an embodiment, the communication unit 701 may generate a baseband signal depending on a scheduling result and a transmit power calculation result. In addition, an RF unit in the communication unit 701 may transmit the generated signal through an antenna.

The communication unit 701 transmits and receives a signal as described above. Accordingly, the communication unit 701 may be referred to as a 'transmitter', a 'receiver', or a 'transceiver'. In addition, in the following description, transmission and reception performed through a radio channel are used to imply that the aforementioned process is performed by the communication unit 701.

The backhaul communication unit 703 provides an interface for performing communication with different nodes in a network. That is, the backhaul communication unit 703 coverts a bit-stream transmitted from the base station to a different node, for example, a different access node, a different base station, a higher node, a core network, or the like, into a physical signal, and converts the physical signal received from the different node into a bit-stream.

The storage unit 705 stores data such as a basic program, application program, configuration information, or the like for an operation of the base station. The storage unit 705 may include a memory. The storage unit 705 may be constructed of a volatile memory, a non-volatile memory, or a combination of the volatile memory and the non-volatile memory. In addition, the storage unit 705 provides stored data according to a request of the control unit 707.

The control unit 707 controls overall operations of the base station. For example, the control unit 707 transmits and receives a signal via the communication unit 701 or through the backhaul communication unit 703. Further, the control unit 707 writes data to the storage unit 220, and reads the data. In addition, the communication unit 707 may perform functions of a protocol stack required in a communication standard. For this, the control unit 707 may include at least one processor. According to various embodiments, the control unit 707 may control the base station to perform operations according to various embodiments described below.

The structure of the base station 110 of FIG. 7 is only an example of the base station, and the example of the base station performing various embodiments of the disclosure is not limited to the structure illustrated in FIG. 7. That is, the structure may be added, deleted, or changed in part according to various embodiments.

Although the base station is described as one entity in FIG. 7, the disclosure is not limited thereto as described above. The base station according to various embodiments may be implemented to construct not only an integrated deployment (e.g., eNB of LTE) but also an access network having a distributed deployment. As exemplified to describe embodiments of FIG. 1 to FIG. 6, the base station may be divided into a central unit (CU) and a digital unit (DU). The CU may be implemented to perform an upper layer function (e.g., packet data convergence protocol (PDCP), RRC). The DU may be implemented to perform a lower layer function (e.g., medium access control (MAC), physical (PHY)).

As such, the base station having a separate deployment may further include a configuration for fronthaul interface communication. According to an embodiment, the base station, as the DU, may perform functions for transmitting and receiving a signal in a wired communication environment. The DU may include a wired interface for controlling a device-to-device direct connection through a transmission medium (e.g. a copper wire, an optical fiber). For example, the DU may transfer an electrical signal to another device through the copper wire, or may perform conversion between the electrical signal and an optical signal. The DU may be coupled to the CU of a distributed deployment. However, this description is not to be construed as excluding a scenario in which the DU is coupled to the CU through a wireless network. In addition, the DU may be additionally coupled to a radio unit (RU). However, this description is not to be constructed as excluding a wireless environment constructed of only the CU and the DU.

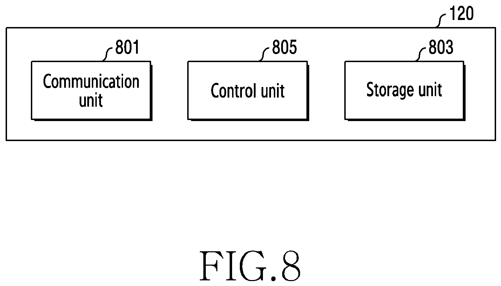

FIG. 8 illustrates a structure of a LTE in a wireless communication system according to various embodiments of the disclosure. Hereinafter, the term '... unit', '... device', or the like implies a unit of processing at least one function or operation, and may be implemented in hardware or software or in combination of the hardware and the software.

Referring to FIG. 8, the UE includes a communication unit 801, a storage unit 803, and a control unit 805.

The communication unit 801 performs functions for transmitting and receiving a signal through a radio channel. For example, the communication unit 801 performs a conversion function between a baseband signal and a bit-stream according to a physical layer protocol of the system. For example, in data transmission, the communication unit 801 generates complex symbols by coding and modulating a transmission bit-stream. In addition, in data reception, the communication unit 801 restores a reception bit-stream by demodulating and decoding a baseband signal. The communication unit 801 up-converts a baseband signal into an RF signal and thereafter transmits it through an antenna, and down-converts an RF signal received through the antenna into a baseband signal. For example, the communication unit 801 may include a transmission filter, a reception filter, an amplifier, a mixer, an oscillator, a DAC, an ADC, or the like.

In addition, the communication unit 801 may include a plurality of transmission/reception paths. Further, the communication unit 801 may include an antenna unit. The communication unit 801 may include at least one antenna array constructed of a plurality of antenna elements. From a hardware aspect, the communication unit 801 may be constructed of a digital circuit and an analog circuit (e.g., a radio frequency integrated circuit (RFIC)). Herein, the digital circuit and the analog circuit may be realized as one package. In addition, the communication unit 801 may include a plurality of RF chains. The communication unit 801 may perform beamforming. In order to assign a directivity depending on a configuration of the control unit 805 to a signal to be transmitted/received, the communication unit 801 may apply a beamforming weight to the signal.

In addition, the communication unit 801 may transmit and receive a signal. For this, the communication unit 801 may include at least one transceiver. The communication unit 801 may transmit a downlink signal. The downlink signal may include a synchronization signal (SS), a reference signal (RS) (e.g., cell-specific reference Signal (CRS), demodulation (DM)-RS), system information (e.g., MIB, SIB, remaining system information (RMSI), other system information (OSI)), configuration message, control information, uplink data, or the like. In addition, the communication unit 801 may receive an uplink signal. The uplink signal may include uplink control information (UCI), a random access-related signal (e.g., random access preamble (RAP) (or message 1 (Msag1), message 3 (Msg3)), a reference signal (e.g., sounding reference signal (SRS), DM-RS), a buffer status report (BSR), or the like. For example, the UCI may include at least one of a scheduling request (SR), ACK/NACK information of a hybrid acknowledge (HARQ) procedure, channel state information (CSI), or the like.

Specifically, the communication unit 801 may include an RF processor and a baseband processor. The RF processor performs a function for transmitting and receiving a signal via a radio channel, such as signal band conversion, amplification, or the like. That is, the RF processor up-converts a baseband signal into a radio frequency (RF) signal provided from the baseband processor and then transmits it through an antenna, and may down-convert an RF signal received through the antenna into a baseband signal. For example, the RF processor may include a transmission filter, a reception filter, an amplifier, a mixer, an oscillator, a DAC, an ADC, or the like. Although only one antenna is illustrated in FIG. 2H, the UE may have a plurality of antennas. In addition, the RF processor may include a plurality of RF chains. Further, the RF processor may perform beamforming. For the beamforming, the RF processor may adjust a phase and magnitude of each of signals transmitted and received through a plurality of antennas or antenna elements.

The baseband processor performs a conversion function between a baseband signal and a bit-stream according to a physical layer protocol of a system. For example, in data transmission, the baseband processor generates complex symbols by coding and modulating a transmission bit-stream. In addition, in data reception, the baseband processor restores a reception bit-stream by demodulating and decoding a baseband signal provided from the RF processor. For example, in case of conforming to an orthogonal frequency division multiplexing (OFDM) scheme, in data transmission, the baseband processor generates complex symbols by performing coding and modulation on a transmitted bit-stream, maps the complex symbols to subcarriers, and then configures OFDM symbols by performing an IFFT operation and a CP insertion operation. In addition, in data reception, the baseband processor splits the baseband signal provided from the RF processor on an OFDM symbol basis, restores signals mapped to the subcarriers by using an FFT operation, and then restores a received bit-stream by performing demodulation and decoding.

The communication unit 801 transmits and receives a signal as described above. Accordingly, the entirety or part of the communication unit 801 may be referred to as a transmitter, a receiver, or a transceiver. Further, the communication unit 801 may include a plurality of communication modules to support a plurality of different radio access technologies. In addition, the communication unit 801 may include different communication modules to process signals of different frequency bands. For example, the different radio access technologies may include a wireless LAN (e.g., IEEE 802.1x), a cellular network (e.g., LTE, NR), or the like. In addition, the different frequency bands may include a super high frequency (SHF) (e.g., 2.5GHz, 5GHz) band and a millimeter (mm) wave (e.g., 60GHz) band. Further, the communication unit 801 may use the same type of radio access techniques on different frequency bands (e.g., an unlicensed band for licensed assisted access (LAA), a citizens broadband radio service (CBRS) (e.g., 3.5GHz)).

The storage unit 803 stores data, such as a basic program, application program, configuration information, or the like for an operation of the UE. The storage unit 803 may be constructed of a volatile memory, a non-volatile memory, or a combination of the volatile memory and the non-volatile memory. The storage unit 803 stores data, such as a basic program, application program, configuration information, or the like for an operation of the UE.

The control unit 805 controls overall operations of the LTE. For example, the control unit 805 transmits and receives a signal via the communication unit 801. In addition, the control unit 805 writes data to the storage unit 803 and reads the data. Further, the control unit 805 may perform functions of a protocol stack required in a communication standard. To this end, the control unit 805 may include at least one processor. The control unit 805 may include at least one processor or micro-processor, or may be part of the processor. In addition, part of the communication unit 801 and the control unit 805 may be referred to as a communication processor (CP). The control unit 805 may include various modules for performing communication. According to various embodiments, the control unit 805 may control the LTE to perform operations according to various embodiments described below.

The control unit 805 controls overall operations of the LTE. For example, the control unit 805 transmits and receives a signal via the communication unit 801. In addition, the control unit 805 writes data to the storage unit 803 and reads the data. For this, the control unit 805 may include at least one processor. For example, the control unit 805 may include a communication processor (CP) which provides control for communication and an application processor (AP) which provides control to a higher layer, such as an application program. According to various embodiments of the disclosure, the control unit 805 may be configured to perform a function of sharing a dynamic spectrum. According to an embodiment, the control unit 805 may be configured such that the terminal 120 dynamically uses a cell of LTE and a cell of NR, in an EN-DC environment. In addition, according to an embodiment, the control unit 805 may be configured such that the terminal 120 dynamically uses cells depending on two nodes, not only in the EN-DC environment but alto an MR-DC environment. In addition thereto, the control unit 805 may control the UE to perform the aforementioned operations according to various embodiments.

Since UE transmit power indicated in the standard is to change a PSD which is unit resource transmission, a method for increasing the PSD even if the transmit power reaches an upper limit has been described in the disclosure. UEs in medium and weak electric fields reach an upper limit of transmit power, and in order to more easily control the power of the UE, embodiments of the disclosure allow the LTE to increase the transmit power irrespective of a TPC non-reflection condition depending on maximum transmit power. In other words, even if the transmit power reaches the maximum transmit power and a TPC having a positive power control value is received, the UE may be configured to calculate uplink transmit power by reflecting the power control value depending on the TPC. In addition, for smooth uplink resource allocation of the base station, the disclosure proposes capability information so that the base station knows that the LTE is able to perform such a function. In addition to the capability information, additional control signaling is proposed so that the base station is able to configure an unrestricted TPC function adaptively to the UE. When the base station performs power control in a power increasing direction (e.g., from the first resource allocation 450 to the second resource allocation 470 in FIG. 4B) of the UE, uncertainty caused by a standard restriction may be removed. Accordingly, there is an advantage in an uplink throughput and a control delay case.

In 6-bit PH information indicated by the standard, since a range of the PH indicated by 0 or 63 does not indicate an accurate PH, only a value of 63 is persistently reported in a strong electric field, which leads to a problem in that it is difficult for the base station to accurately recognize a power state of the UE. Therefore, the disclosure proposes a PHR including a more detailed PH than the existing 6-bit PH. For efficient PH transmission, not only more than 6 bits may be used but also a specific bit may be used to indicate a sign of the PH. In addition, in some embodiments, the specific bit may be used to indicate whether to support an embodiment of the disclosure.

According to the standard of the latest release 16, a usage of Reserved (R) is added in the PHR MAC CE. When mpe-Reporting-FR2-r16 is configured through an RRC configuration message, a bit may be used to report to the base station a maximum power reduction (MPR) value applied by the UE. When mpe-reporting-FR2-r16 is configured in frequency range #2 (FR2) (e.g., 24.25 GHz to 52.6 GHz) of 3GPP, the MPR may be divided into 4 steps through 2 bits of the MPE.

Embodiments of the disclosure may be applied in association with the aforementioned rule. Before describing the embodiments, necessary terms are defined.

1) P-MPR (power management MPR): Out-of-band shall be ensured not to exceed a corresponding value. A UE may perform a backoff within a regulated value.

2) Backoff: It means a value obtained by subtracting maximum power from allocated power, i.e., a value for controlling not to exceed the maximum power (e.g., in case of NR, it corresponds to a lower case in the equation of Section 7.1.1 of 3GPP TS 38.213).

3) PH value: It means a value obtained by subtracting allocation power from maximum power, that is, it means surplus power.

According to an embodiment, the LTE operating at FR2 may determine whether to configure mpe-Reporting-FR2-r16 through an RRC configuration message. Thereafter, according to whether it is configured, the UE may determine whether to apply the modified PHR (or extended PHR) according to embodiments of the disclosure. For example, if mpe-Reporting-FR2-r16 is not configured, the existing reserved bit may indicate whether to apply the modified PHR, as shown in Table 9 and Table 10.

According to an embodiment, the LTE operating in LTE may determine whether to apply the modified PHR (or extended PHR) according to embodiments of the disclosure, irrespective of whether to configure mpe-Reporting-FR2-r16. For example, the UE may identify whether to apply the modified PHR according to 'M' or 'P' of Table 9 or 'P' of Table 10.

According to an embodiment, the UE operating in NR FR1 (frequency range #1) (e.g., 450 MHz to 7.125 GHz), regardless of whether to configure mpe-Reporting-FR2-r16, whether to apply the modified PHR (or extended PHR) according to embodiments of the disclosure may be determined. For example, the UE may identify whether to apply the modified PHR, according to 'M' or 'P' of table 9 or "P" of Table 10.

Meanwhile, according to the UE capability, embodiments of the disclosure may be applied in association with applying of the MPE, instead of distinguishing the aforementioned applying of the MPE and the modified PHR. Due to a wide power range at a high frequency band (e.g., FR2), an additional bit may be required in addition to the existing 6 bits. The UE may use 1 bit or 2 bits in the PHR MAC CE, so that the base station is able to more accurately recognize transmit power of the UE. According to an embodiment, the UE may determine the transmit power of the UE, based on at least one additional bit (e.g., 1 bit or 2 bits) and 6 bits indicating the PH. According to an embodiment, the additional bit may indicate whether to support the extended PHR according to embodiments of the disclosure, similarly to whether to apply the MPE. Herein, the extended PHR may mean a PHR for indicating a wider range than the existing 6-bit PHR, in order to more clearly recognize the transmit power of the UE. According to an embodiment, the additional bit may indicate a range to which a PH value indicated by the 6 bits is to be applied similarly to the MPE. According to the indicated value, transmit power to be determined may vary even in case of the same PH value. Through additional bit(s), a wider power range may be indicated than a power range indicated by using the existing 6 bits.

According to embodiments of the disclosure, a method of operating a user equipment (UE) in a wireless communication system may include receiving, from a base station, downlink control information including a transmit power control (TPC) command, if the UE is related to an unrestricted TPC configuration, the UE reaches maximum transmit power, and a power control value depending on the TPC command is a positive value, determining uplink transmit power, based on the power control value, and transmitting an uplink signal, based on the determined uplink transmit power.

According to embodiments of the disclosure, the method may further include, if the UE is not related to the unrestricted TPC configuration, the UE reaches the maximum transmit power, and the power control value depending on the TPC command is a positive value, determining, by the base station, the uplink transmit power without having to use the power control value.

According to embodiments of the disclosure, the method may further include transmitting, to the base station, capability information indicating that the UE supports the unrestricted TPC configuration.

According to embodiments of the disclosure, the method may further include receiving, from the base station, configuration information indicating that the UE is configured with the unrestricted TPC configuration. The configuration information may be received through radio resource control (RRC) signaling.

According to embodiments of the disclosure, the uplink transmit power may be determined based on the following equation:

$$P_{\text{PUSCH},c}(i) =$$

$$\min \begin{cases} P_{\text{CMAX},c}(i), \\ 10\log_{10}\left(M_{\text{PUSCH},c}(i)\right) + P_{\text{O}_{\text{PUSCH}},c}(j) + \alpha_c(j) \cdot PL_c + \Delta_{\text{TF},c}(i) + f_c(i) \end{cases},$$

where $P_{\text{PUSCH},c}(i)$ denotes UE transmit power at a subframe i and a serving cell c of the uplink signal, $P_{\text{CMAX},c}(i)$ denotes maximum transmit power configured at the subframe i and the serving cell c, $M_{\text{PUSCH},c}(i)$ denotes a bandwidth, $P_{\text{O\_PUSCH},c}(j)$ denotes nominal power, $PL_c$ denotes a pathloss, $\Delta_{TF,c}(i)$ denotes an offset depending on a modulation scheme, and $f_c(i)$ denotes a correction parameter to which the power control value depending on the TPC command is applied.

According to embodiments of the disclosure, the uplink transmit power may be determined based on the following equation;

$$P_{\text{PUSCH},b,f,c}(i, j, q_d, l) =$$

$$\min \begin{cases} P_{\text{CMAX},f,c}(i), \\ P_{\text{O\_PUSCH},b,f,c}(j) + 10\log_{10}\left(2^{\mu} \cdot M_{\text{RB},b,f,c}^{\text{PUCH}}(i)\right) + \alpha_{b,f,c}(j) \cdot PL_{b,f,c}(q_d) + \Delta_{\text{TF},b,f,c}(i) + f_{b,f,c}(i, l) \end{cases}$$

,

where $P_{\text{PUSCH},b,f,c}(i,j,q_d,l)$ denotes LTE transmit power for a PUSCH transmission occasion i, an index j, an RS index qd, and a power control adjusting state index l at a UL Bandwidth Part (BWP) b, a carrier f, and a serving cell c of the uplink signal. $P_{\text{CMAX},f,c}(i)$ denotes maximum transmit power configured at the PUSCH carrier f, the transmission occasion i, and the serving cell c, $M_{\text{RB},b,f,c}^{\text{PUSCH}}(i)$ denotes a bandwidth at the UL BWP carrier b, the carrier f, and the serving cell c, $P_{\text{O\_PUSCH},b,f,c}(j)$ denotes nominal power, $PL_{b,f,c}(q_d)$ denotes a pathloss for the RS index qd at the UL BWP carrier b, the carrier f, and the serving cell c, $\Delta_{\text{TF},b,f,c}(i)$ denotes an offset depending on a modulation scheme, and $f_{b,f,c}(i, l)$ denotes a correction parameter to which the power control value depending on the TPC command is applied.

According to embodiments of the disclosure, the uplink signal may include a physical uplink shared channel (PUSCH) transmission, physical uplink control channel (PUCCH) transmission, or a sounding reference signal (SRS).

According to embodiments of the disclosure, a method of operating a UE in a wireless communication system may include determining a value of a power headroom of a serving cell; and transmitting, to a base station, a power headroom report (PHR) including the value of the power headroom. The PHR may include information indicating a size of the power headroom indicated with 6 bits and information indicating a sign of the power headroom indicated with 1 bit.

According to embodiments of the disclosure, in the method, the PHR may further include 1 bit for indicating that the power headroom further includes information indicating the sign of the power headroom in addition to the 6 bits.

According to embodiments of the disclosure, the method may further include transmitting, to the base station, capability information indicating that the LTE supports PHR transmission including information indicating the sign of the power headroom.

According to embodiments of the disclosure, a method of operating a base station in a wireless communication system may include transmitting, to a LTE, downlink control information including a TPC command, and receiving, from the UE, an uplink signal. Uplink transmit power of the uplink signal may be determined based on the power control value, if the UE is related to an unrestricted TPC configuration, the UE reaches maximum transmit power, and a power control value depending on the TPC command is a positive value; and may be determined, by the base station, without having to use the power control value, if the UE is not related to the unrestricted TPC configuration, the UE reaches the maximum transmit power, and the power control value depending on the TPC command is a positive value.

method of claim 8, further comprising receiving, from the UE, capability information indicating that the LTE supports the unrestricted TPC configuration.

According to embodiments of the disclosure, the method may further include transmitting, to the UE, configuration information indicating that the UE is configured with the unrestricted TPC configuration. The configuration information may be transmitted through RRC signaling.

According to embodiments of the disclosure, a method of operating a base station in a wireless communication system may include receiving, from a LTE, a power headroom report (PHR) including a value of a power headroom of a serving cell. The PHR may include information indicating a size of the power headroom indicated with 6 bits and information indicating a sign of the power headroom indicated with 1 bit.

According to embodiments of the disclosure, the PHR further includes 1 bit for indicating that the power headroom further includes information indicating the sign of the power headroom in addition to the 6 bits.

According to embodiments of the disclosure, the method may further include receiving, from the LTE, capability information indicating that the LTE supports PHR transmission including information indicating the sign of the power headroom.

According to embodiments of the disclosure, a LTE in a wireless communication system may include at least one transceiver and at least one processor. The at least one transceiver may be configured to receive, from a base station, downlink control information including a transmit power control (TPC) command, if the UE is related to an unrestricted TPC configuration, the UE reaches maximum transmit power, and a power control value depending on the TPC command is a positive value, determine uplink transmit power, based on the power control value, and transmitting an uplink signal, based on the determined uplink transmit power.

According to embodiments of the disclosure, the at least one processor may be further configured to determine uplink transmit power, by the base station, without having to use the power control value, if the UE is not related to the unrestricted TPC configuration, the UE reaches the maximum transmit power, and the power control value depending on the TPC command is a positive value.

According to embodiments of the disclosure, the at least one processor may be further configured to transmit, to the base station, capability information indicating that the UE supports the unrestricted TPC configuration.

According to embodiments of the disclosure, the at least one processor may be further configured to receive, from the base station, capability information indicating that the UE is configured with the unrestricted TPC configuration. The configuration information may be received through radio resource control (RRC) signaling.

According to embodiments of the disclosure, the uplink transmit power may be determined based on the following equation:

$$
P_{\text{PUSCH,c}}(i) =
$$
$$
\min \left\{ \begin{array}{l} P_{\text{CMAX,}c}(i), \\ 10\log_{10}\left(M_{\text{PUSCH,c}}(i)\right) + P_{\text{O}_{\text{PUSCH,c}}}(j) + \alpha_c(j) \cdot PL_c + \Delta_{\text{TF,c}}(i) + f_c(i) \end{array} \right\},
$$

where $P_{\text{PUSCH,c}}(i)$ denotes UE transmit power at a subframe i and a serving cell c of the uplink signal, $P_{\text{CMAX,c}}(i)$ denotes maximum transmit power configured at the subframe i and the serving cell c, $M_{\text{PUSCH,c}}(i)$ denotes a bandwidth, $P_{\text{O\_PUSCH,c}}(j)$ denotes nominal power, $PL_c$ denotes a pathloss, $\Delta_{TF,c}(i)$ denotes an offset depending on a modulation scheme, and $f_c(i)$ denotes a correction parameter to which the power control value depending on the TPC command is applied.

According to embodiments of the disclosure, the uplink transmit power may be determined based on the following equation;

$$
P_{\text{PUSCH,}b,f,c}(i, j, q_d, l) =
$$
$$
\min \left\{ \begin{array}{l} P_{\text{CMAX,}f,c}(i), \\ P_{\text{O\_PUSCH,}b,f,c}(j) + 10\log_{10}\left(2^\mu \cdot M_{\text{RB,}b,f,c}^{\text{PUCH}}(i)\right) + \alpha_{b,f,c}(j) \cdot PL_{b,f,c}(q_d) + \Delta_{\text{TF,}b,f,c}(i) + f_{b,f,c}(i, l) \end{array} \right\}
$$

, where $P_{\text{PUSCH},b,f,c}(i,j,q_d,l)$ denotes LTE transmit power for a PUSCH transmission occasion i, an index j, an RS index qd, and a power control adjusting state index l at a UL Bandwidth Part (BWP) b, a carrier f, and a serving cell c of the uplink signal. $P_{\text{CMAX},f,c}(i)$ denotes maximum transmit power configured at the PUSCH carrier f, the transmission occasion i, and the serving cell c, $M_{\text{RB},b,f,c}^{\text{PUSCH}}(i)$ denotes a bandwidth at the UL BWP carrier b, the carrier f, and the serving cell c, $P_{\text{O\_PUSCH},b,f,c}(j)$ denotes nominal power, $PL_{b,f,c}(q_d)$ denotes a pathloss for the RS index qd at the UL BWP carrier b, the carrier f, and the serving cell c, $\Delta_{\text{TF},b,f,c}(i)$ denotes an offset depending on a modulation scheme, and $f_{b,f,c}(i, l)$ denotes a correction parameter to which the power control value depending on the TPC command is applied.

According to embodiments of the disclosure, the uplink signal may include a physical uplink shared channel (PUSCH) transmission, physical uplink control channel (PUCCH) transmission, or a sounding reference signal (SRS).

According to embodiments of the disclosure, a LTE in a wireless communication system may include at least one transceiver and at least one processor. The at least one transceiver may be configured to determine a value of a power headroom of a serving cell; and transmitting, to a base station, a power headroom report (PHR) including the value of the power headroom. The PHR may include information indicating a size of the power headroom indicated with 6 bits and information indicating a sign of the power headroom indicated with 1 bit.

According to embodiments of the disclosure, the PHR may further include 1 bit for indicating that the power headroom further includes information indicating the sign of the power headroom in addition to the 6 bits.

According to embodiments of the disclosure, the at least one processor may be further configured to transmit, to the base station, capability information indicating that the UE supports PHR transmission including information indicating the sign of the power headroom.

According to embodiments of the disclosure, a base station in a wireless communication system includes at least one transceiver and at least one processor. The at least one transceiver may be configured to transmit, to a UE, downlink control information including a TPC command, and receiving, from the UE, an uplink signal. Uplink transmit power of the uplink signal may be determined based on the power control value, if the UE is related to an unrestricted TPC configuration, the UE reaches maximum transmit power, and a power control value depending on the TPC command is a positive value; and may be determined, by the base station, without having to use the power control value, if the UE is not related to the unrestricted TPC configuration, the UE reaches the maximum transmit power, and the power control value depending on the TPC command is a positive value.

According to embodiments of the disclosure, the at least one processor may be further configured to receive, from the LTE, capability information indicating that the LTE supports the unrestricted TPC configuration.

According to embodiments of the disclosure, the at least one processor may be further configured to transmit, to the UE, capability information indicating that the UE is configured with the unrestricted TPC configuration. The configuration information may be received through radio resource control (RRC) signaling.

According to embodiments of the disclosure, a base station in a wireless communication system includes at least one transceiver and at least one processor. The at least one transceiver may be configured to receive, from a LTE, a power headroom report (PHR) including a value of a power headroom of a serving cell. The PHR may include information indicating a size of the power headroom indicated with 6 bits and information indicating a sign of the power headroom indicated with 1 bit.

According to embodiments of the disclosure, the PHR further includes 1 bit for indicating that the power headroom further includes information indicating the sign of the power headroom in addition to the 6 bits.

According to embodiments of the disclosure, the at least one processor may be further configured to receive, from the LTE, capability information indicating that the LTE supports PHR transmission including information indicating the sign of the power headroom.

Methods based on the embodiments disclosed in the claims and/or specification of the disclosure may be implemented in hardware, software, or a combination of both.

When implemented in software, computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

The program (i.e., the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may have access to a device for performing an embodiment of the disclosure via an external port. In addition, an additional storage device on a communication network may have access to the device for performing the embodiment of the disclosure.

n the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure.

**Claims**

1. A method of operating a user equipment (UE) in a wireless communication system, the method comprising:

   receiving, from a base station, downlink control information including a transmit power control (TPC) command;
   if the UE is related to an unrestricted TPC configuration, the UE reaches maximum transmit power, and a power control value depending on the TPC command is a positive value, determining uplink transmit power, based on the power control value; and
   transmitting an uplink signal, based on the determined uplink transmit power.

2. The method of claim 1, further comprising:

   receiving, from the base station, configuration information indicating that the UE is configured with the unrestricted TPC configuration; and
   if the UE is not related to the unrestricted TPC configuration, the UE reaches the maximum transmit power, and the power control value depending on the TPC command is a positive value, the base station does not use the power control value, and determining the uplink transmit power,
   wherein the configuration information is received through radio resource control (RRC) signaling.

3. The method of claim 1, further comprising:
   transmitting, to the base station, capability information indicating that the UE supports the unrestricted TPC configuration.

4. The method of claim 1, wherein the uplink transmit power is determined based on the following equation:

$$P_{\text{PUSCH,c}}(i) =$$

$$\min\left\{ \begin{matrix} P_{\text{CMAX,c}}(i), \\ 10\log_{10}\left(M_{\text{PUSCH,c}}(i)\right) + P_{\text{O}_{\text{PUSCH,c}}}(j) + \alpha_c(j) \cdot PL_c + \Delta_{\text{TF,c}}(i) + f_c(i) \end{matrix} \right\},$$

where $P_{\text{PUSCH,c}}(i)$ denotes UE transmit power at a subframe i and a serving cell c of the uplink signal, $P_{\text{CMAX,c}}(i)$ denotes maximum transmit power configured at the subframe i and the serving cell c, $M_{\text{PUSCH,c}}(i)$ denotes a bandwidth, $P_{\text{O\_PUSCH,c}}(j)$ denotes nominal power, $PL_c$ denotes a pathloss, $\Delta_{TF,c}(i)$ denotes an offset depending on a modulation scheme, and $f_c(i)$ denotes a correction parameter to which the power control value depending on the TPC command is applied.

5. The method of claim 1, wherein the uplink transmit power is determined based on the following equation:

$$P_{\text{PUSCH},b,f,c}(i,j,q_d,l) =$$

$$\min\left\{\begin{array}{l}P_{\text{CMAX},f,c}(i),\\ P_{\text{O\_PUSCH},b,f,c}(j) + 10\log_{10}\left(2^{\mu} \cdot M_{\text{RB},b,f,c}^{\text{PUCH}}(i)\right) + \alpha_{b,f,c}(j) \cdot PL_{b,f,c}(q_d) + \Delta_{\text{TF},b,f,c}(i) + f_{b,f,c}(i,l)\end{array}\right\}$$

, where $P_{\text{PUSCH},b,f,c}(i,j,q_d,l)$ denotes LTE transmit power for a PUSCH transmission occasion i, an index j, an RS index $q_d$, and a power control adjusting state index l at a UL Bandwidth Part (BWP) b, a carrier f, and a serving cell c of the uplink signal. $P_{\text{CMAX},f,c}(i)$ denotes maximum transmit power configured at the PUSCH carrier f, the transmission occasion i, and the serving cell c, $M_{\text{RB},b,f,c}^{\text{PUSCH}}(i)$ denotes a bandwidth at the UL BWP carrier b, the carrier f, and the serving cell c, $P_{\text{O\_PUSCH},b,f,c}(j)$ denotes nominal power, $PL_{b,f,c}(q_d)$ denotes a pathloss for the RS index $q_d$ at the UL BWP carrier b, the carrier f, and the serving cell c, $\Delta_{\text{TF},b,f,c}(i)$ denotes an offset depending on a modulation scheme, and $f_{b,f,c}(i, l)$ denotes a correction parameter to which the power control value depending on the TPC command is applied.

6. A method of operating a user equipment (UE) in a wireless communication system, the method comprising:

   determining a value of a power headroom of a serving cell; and
   transmitting, to a base station, a power headroom report (PHR) including the value of the power headroom,
   wherein the PHR includes information indicating a size of the power headroom indicated with 6 bits and information indicating a sign of the power headroom indicated with 1 bit.

7. The method of claim 6, further comprising:

   transmitting, to the base station, capability information indicating that the LTE supports PHR transmission including the information indicating the sign of the power headroom,
   wherein the PHR further includes 1 bit for indicating that the power headroom further includes the information indicating the sign of the power headroom in addition to the 6 bits.

8. A method of operating a base station in a wireless communication system, the method comprising:

   transmitting, to a user equipment (UE), downlink control information including a transmit power control (TPC) command; and
   receiving, from the UE, an uplink signal,
   wherein uplink transmit power of the uplink signal is:

      determined based on the power control value, if the UE is related to an unrestricted TPC configuration, the UE reaches maximum transmit power, and a power control value depending on the TPC command is a positive value, and
      determined based on the base station not to use the power control value if the UE is not related to the unrestricted TPC configuration, the UE reaches the maximum transmit power, and the power control value depending on the TPC command is a positive value.

9. The method of claim 8, further comprising:
   receiving, from the UE, capability information indicating that the UE supports the unrestricted TPC configuration.

10. The method of claim 8, further comprising

    transmitting, to the UE, configuration information indicating that the UE is configured with the unrestricted TPC configuration,
    wherein the configuration information is transmitted through RRC signaling.

11. A method of operating a base station in a wireless communication system, the method comprising:

    receiving, from a user equipment (UE), a power headroom report (PHR) including a value of a power headroom of a serving cell,
wherein the PHR includes information indicating a size of the power headroom indicated with 6 bits and information indicating a sign of the power headroom indicated with 1 bit.

12. The method of claim 11, further comprising:

receiving, from the LTE, capability information indicating that the LTE supports PHR transmission including information indicating the sign of the power headroom,
wherein the PHR further includes 1 bit for indicating that the power headroom further includes information indicating the sign of the power headroom in addition to the 6 bits.

13. A user equipment (LTE) in a wireless communication system, the LTE comprising:

at least one transceiver; and
at least one processor,
wherein the at least one processor is configured to perform one of the methods of claims 1 to 7.

14. A LTE in a wireless communication system, the UE comprising:

at least one transceiver; and
at least one processor,
wherein the at least one processor is configured to perform one of the methods of claims 8 to 12

FIG.1

FIG.2

| | |
|---|---|
| PDCP | ~310 |
| RLC | ~320 |
| MAC | ~330 |
| PHY | ~340 |

FIG.3

FIG.4A

FIG.4B

110

Base station

120

Terminal

501

PH Calculation

PHR Transmission (503)

FIG.5

Base station 110

Terminal 120

UE capability information (601)

# FIG.6

110

701

**Communication unit**

703

**Backhaul communication unit**

705

**Storage unit**

707

**Control unit**

# FIG.7

```
                                                                    ⌐120
        ⌐801                    ⌐805                    ⌐803
  ┌────────────────┐    ┌────────────────┐    ┌────────────────┐
  │ Communication  │    │  Control unit  │    │  Storage unit  │
  │     unit       │    │                │    │                │
  └────────────────┘    └────────────────┘    └────────────────┘
```

# FIG.8

<table>
<tr><td colspan="2" align="center">**INTERNATIONAL SEARCH REPORT**</td><td colspan="2">International application No.<br>**PCT/KR2022/002059**</td></tr>
</table>

| | |
|---|---|
| **A.** | **CLASSIFICATION OF SUBJECT MATTER** |
| | **H04W 52/14**(2009.01)i; **H04W 52/54**(2009.01)i; **H04W 52/36**(2009.01)i; **H04W 52/24**(2009.01)i; **H04W 8/24**(2009.01)i |

According to International Patent Classification (IPC) or to both national classification and IPC

| | |
|---|---|
| **B.** | **FIELDS SEARCHED** |

Minimum documentation searched (classification system followed by classification symbols)

H04W 52/14(2009.01); H04B 7/26(2006.01); H04J 11/00(2006.01); H04W 52/04(2009.01); H04W 52/36(2009.01); H04W 72/04(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 전력 제어(transmit power control, TPC), 무제한(unrestrict), 최대(maximum), 전력 헤드룸 보고(power headroom report, PHR), 양수(positive, plus), 음수(negative, minus), 비트(bit), 플래그(flag)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | KR 10-2018-0008878 A (LG ELECTRONICS INC.) 24 January 2018 (2018-01-24)<br>See claims 1-6. | 1-14 |
| A | KR 10-2021-0013864 A (SAMSUNG ELECTRONICS CO., LTD.) 08 February 2021 (2021-02-08)<br>See paragraphs [0188]-[0196]; and claims 1-7. | 1-14 |
| A | US 2013-0010720 A1 (LOHR, Joachim et al.) 10 January 2013 (2013-01-10)<br>See paragraphs [0197], [0405] and [0407]. | 1-14 |
| A | KR 10-2014-0084133 A (LG ELECTRONICS INC.) 04 July 2014 (2014-07-04)<br>See paragraphs [0080]-[0113]. | 1-14 |
| A | EP 2260664 B1 (VIVO MOBILE COMMUNICATION CO., LTD.) 15 April 2020 (2020-04-15)<br>See claims 1-10. | 1-14 |

| | | | |
|---|---|---|---|
| ☐ Further documents are listed in the continuation of Box C. | | ☑ See patent family annex. | |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 May 2022** | **26 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

| **INTERNATIONAL SEARCH REPORT**<br>Information on patent family members | | | | International application No.<br>**PCT/KR2022/002059** | | | |
|---|---|---|---|---|---|---|---|
| Patent document<br>cited in search report | | | Publication date<br>(day/month/year) | Patent family member(s) | | | Publication date<br>(day/month/year) |
| KR | 10-2018-0008878 | A | 24 January 2018 | CN | 105210430 | A | 30 December 2015 |
| | | | | CN | 105210430 | B | 19 April 2019 |
| | | | | EP | 3249980 | A1 | 29 November 2017 |
| | | | | EP | 3249980 | B1 | 02 January 2019 |
| | | | | JP | 2016-515334 | A | 26 May 2016 |
| | | | | KR | 10-1819515 | B1 | 17 January 2018 |
| | | | | KR | 10-2097498 | B1 | 06 April 2020 |
| | | | | US | 10314019 | B2 | 04 June 2019 |
| | | | | US | 2018-0139751 | A1 | 17 May 2018 |
| | | | | US | 9907058 | B2 | 27 February 2018 |
| KR | 10-2021-0013864 | A | 08 February 2021 | US | 11272462 | B2 | 08 March 2022 |
| | | | | US | 2021-0037481 | A1 | 04 February 2021 |
| US | 2013-0010720 | A1 | 10 January 2013 | CN | 105744614 | B | 18 December 2018 |
| | | | | EP | 3280194 | B1 | 30 October 2019 |
| | | | | EP | 3544222 | A1 | 25 September 2019 |
| | | | | JP | 2019-054548 | A | 04 April 2019 |
| | | | | JP | 2020-043580 | A | 19 March 2020 |
| | | | | JP | 6624405 | B2 | 25 December 2019 |
| | | | | JP | 6851034 | B2 | 31 March 2021 |
| | | | | US | 10686580 | B2 | 16 June 2020 |
| | | | | US | 11005640 | B2 | 11 May 2021 |
| | | | | US | 2020-0336271 | A1 | 22 October 2020 |
| | | | | US | 2021-0258129 | A1 | 19 August 2021 |
| | | | | WO | 2011-098227 | A1 | 18 August 2011 |
| | | | | WO | 2011-098275 | A1 | 18 August 2011 |
| KR | 10-2014-0084133 | A | 04 July 2014 | US | 2014-0219234 | A1 | 07 August 2014 |
| | | | | US | 9237528 | B2 | 12 January 2016 |
| | | | | WO | 2013-051855 | A1 | 11 April 2013 |
| EP | 2260664 | B1 | 15 April 2020 | AU | 2009-228928 | A1 | 01 October 2009 |
| | | | | AU | 2009-228928 | B2 | 03 April 2014 |
| | | | | CN | 102047736 | A | 04 May 2011 |
| | | | | EP | 2260664 | A2 | 15 December 2010 |
| | | | | ES | 2798599 | T3 | 11 December 2020 |
| | | | | US | 2009-0245191 | A1 | 01 October 2009 |
| | | | | US | 8570957 | B2 | 29 October 2013 |
| | | | | WO | 2009-118367 | A2 | 01 October 2009 |
| | | | | WO | 2009-118367 | A3 | 19 November 2009 |

Form PCT/ISA/210 (patent family annex) (July 2019)